(19) Europäisches Patentamt
European Patent Office
Office européen des brevets

(11) EP 4 610 047 A1

(12) **EUROPEAN PATENT APPLICATION**
published in accordance with Art. 153(4) EPC

(43) Date of publication:
**03.09.2025 Bulletin 2025/36**

(21) Application number: **23882582.2**

(22) Date of filing: **23.10.2023**

(51) International Patent Classification (IPC):
***B32B 27/18*** *(2006.01)* ***B32B 15/08*** *(2006.01)*
***B29B 7/88*** *(2006.01)* ***H01M 50/119*** *(2021.01)*
***H01M 50/121*** *(2021.01)* ***H01M 50/126*** *(2021.01)*
***H01M 50/129*** *(2021.01)*

(52) Cooperative Patent Classification (CPC):
**B29B 7/88; B32B 15/08; B32B 27/18; H01M 50/119; H01M 50/121; H01M 50/126; H01M 50/129;** Y02E 60/10

(86) International application number:
**PCT/JP2023/038185**

(87) International publication number:
**WO 2024/090377 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.10.2022 JP 2022172490**

(71) Applicant: **Resonac Corporation**
**Tokyo 105-7325 (JP)**

(72) Inventors:
- **ASOMA, Yuichiro**
  **Tokyo 105-7325 (JP)**
- **KODA, Naoya**
  **Tokyo 105-7325 (JP)**
- **NAKAJIN, Kokin**
  **Tokyo 105-7325 (JP)**
- **NISHIZAWA, Shohei**
  **Tokyo 105-7325 (JP)**

(74) Representative: **Strehl & Partner mbB**
**Maximilianstrasse 54**
**80538 München (DE)**

# (54) LUBRICANT SELECTION APPARATUS, FRICTION COEFFICIENT ESTIMATION APPARATUS, LUBRICANT SELECTION METHOD, METHOD FOR MANUFACTURING EXTERIOR MATERIAL FOR POWER STORAGE DEVICE, AND PROGRAM

(57) A friction coefficient between a resin layer and a mold layer via a lubrication layer is stably determined with a small amount of calculation. A lubricant selection apparatus includes a lubricant information input unit configured to receive an input of information on a plurality of lubricant candidates; an energy calculation unit configured to calculate an interaction energy between a lubrication layer and a resin layer, the lubrication layer being formed by each of the plurality of lubricant candidates; a friction coefficient estimation unit configured to estimate, in accordance with the interaction energy, a friction coefficient between the resin layer and a mold layer via the lubrication layer; and a lubricant selection unit configured to select a lubricant from the plurality of lubricant candidates in accordance with the friction coefficient.

EP 4 610 047 A1

FIG.6

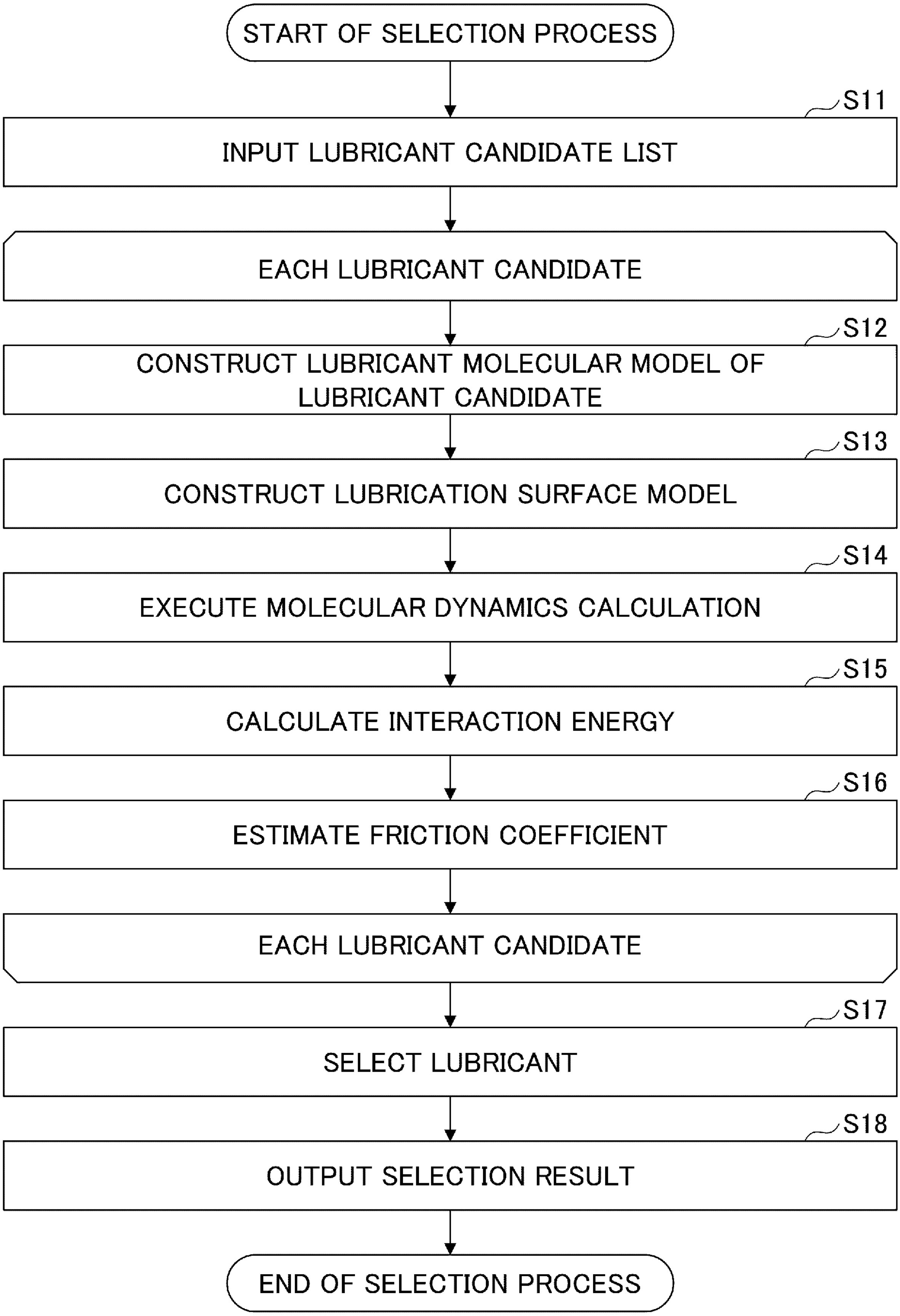
START OF SELECTION PROCESS
S11
INPUT LUBRICANT CANDIDATE LIST
EACH LUBRICANT CANDIDATE
S12
CONSTRUCT LUBRICANT MOLECULAR MODEL OF LUBRICANT CANDIDATE
S13
CONSTRUCT LUBRICATION SURFACE MODEL
S14
EXECUTE MOLECULAR DYNAMICS CALCULATION
S15
CALCULATE INTERACTION ENERGY
S16
ESTIMATE FRICTION COEFFICIENT
EACH LUBRICANT CANDIDATE
S17
SELECT LUBRICANT
S18
OUTPUT SELECTION RESULT
END OF SELECTION PROCESS

## Description

### TECHNICAL FIELD

The present disclosure relates to a lubricant selection apparatus, a friction coefficient estimation apparatus, a lubricant selection method, a production method of a power storage device packaging material, and a program.

### BACKGROUND ART

In recent years, as a packaging material for a power storage device, a stack of a heat-resistant resin layer (base layer)/an adhesive layer/a metal foil layer/an adhesive layer/a thermoplastic resin layer (sealant layer) is used. By forming such a stack into a three-dimensional shape, such as a substantially rectangular parallelepiped shape or the like, through overhang forming or deep draw forming, a housing space for a body of a power storage device can be ensured.

In order to improve a packaging material in terms of protectability and formability (slidability), a packaging material including a mat varnish layer (protective layer) on the exposed surface of a base layer is proposed. For example, Patent Literature 1 discloses a power storage device packaging material including a base layer formed of a heat-resistant resin, a sealant layer serving as an inner layer, and a metal foil layer disposed between the base layer and the sealant layer. In the disclosed power storage device packaging material, a protective layer is stacked on a surface of the base layer opposite to that of the base layer facing the metal foil layer. According to the power storage device packaging material disclosed in Patent Literature 1, a lubricant is added to the base layer, thereby forming the protective layer with the bled-out lubricant.

### CITATION LIST

### PATENT LITERATURE

Patent Literature 1: Japanese Laid-Open Patent Publication No. 2022-20772

### SUMMARY OF THE INVENTION

### PROBLEM TO BE SOLVED BY THE INVENTION

According to the packaging material disclosed in Patent Literature 1, the friction coefficient between the base layer and the mold via the protective layer influences formability. However, there are many candidate substances for the lubricant, and selecting the optimum lubricant through experiments or the like requires significant amounts of time and effort. It is possible to calculate the friction coefficient of the lubricant through simulation using the molecular dynamics method or the like. However, friction is a complicated physical phenomenon, and thus the amount of calculation is large, and becomes larger as the number of substances increases. Also, the friction coefficient calculated by the molecular dynamics method changes over time, and thus it is challenging to obtain friction coefficients that can be compared for evaluation.

In view of the technical issues as described above, an object of the present disclosure in one aspect is to stably determine the friction coefficient between a resin layer and a mold layer via a lubrication layer with a small amount of calculation.

### MEANS FOR SOLVING THE PROBLEM

The present disclosure includes configurations as presented below.

[1] A lubricant selection apparatus, including:

- a lubricant information input unit configured to receive an input of information on a plurality of lubricant candidates;
- an energy calculation unit configured to calculate an interaction energy between a lubrication layer and a resin layer, the lubrication layer being formed by each of the plurality of lubricant candidates;
- a friction coefficient estimation unit configured to estimate, in accordance with the interaction energy, a friction coefficient between the resin layer and a mold layer via the lubrication layer; and
- a lubricant selection unit configured to select a lubricant from the plurality of lubricant candidates in accordance with the friction coefficient.

[2] The lubricant selection apparatus according to the above [1], in which
the friction coefficient estimation unit is configured to estimate the friction coefficient from the interaction energy in accordance with a regression formula that is predetermined.
[3] The lubricant selection apparatus according to the above [2], in which
the regression formula expresses a correlation between the interaction energy and the friction coefficient.
[4] The lubricant selection apparatus according to the above [3], in which
the regression formula is derived using the interaction energy and the friction coefficient that are calculated through molecular dynamics calculation on a lubricant different from the lubricant candidates.
[5] The lubricant selection apparatus according to the above [4], in which
a regression coefficient of the regression formula is $-3.6\times10^{-5}$
[6] The lubricant selection apparatus according to any one of the above [1] to [5], in which
the lubricant is used as a lubricant to be added to the resin layer in a power storage device packaging material including the resin layer, a sealant layer, and a metal foil layer disposed between the resin layer and the sealant layer.
[7] A friction coefficient estimation apparatus, including:

a lubricant information input unit configured to receive an input of information on a lubricant;
an energy calculation unit configured to calculate an interaction energy between a lubrication layer and a resin layer, the lubrication layer being formed by the lubricant; and
a friction coefficient estimation unit configured to estimate, in accordance with the interaction energy, a friction coefficient between the resin layer and a mold layer via the lubrication layer.

[8] A lubricant selection method, including:

a procedure of receiving an input of information on a plurality of lubricant candidates;
a procedure of calculating an interaction energy between a lubrication layer and a resin layer, the lubrication layer being formed by each of the plurality of lubricant candidates;
a procedure of estimating, in accordance with the interaction energy, a friction coefficient between the resin layer and a mold layer via the lubrication layer; and
a procedure of selecting a lubricant from the plurality of lubricant candidates in accordance with the friction coefficient,
the procedure of receiving, the procedure of calculating, the procedure of estimating, and the procedure of selecting being executed by a computer.

[9] A production method of a power storage device packaging material, the production method including:
using a lubricant selected by the lubricant selection method of the above [8], thereby producing the power storage device packaging material including the resin layer to which the lubricant is added, a sealant layer, and a metal foil layer disposed between the resin layer and the sealant layer.
[10] A program causing a computer to execute:

a procedure of receiving an input of information on a plurality of lubricant candidates;
a procedure of calculating an interaction energy between a lubrication layer and a resin layer, the lubrication layer being formed by each of the plurality of lubricant candidates;
a procedure of estimating, in accordance with the interaction energy, a friction coefficient between the resin layer and a mold layer via the lubrication layer; and
a procedure of selecting a lubricant from the plurality of lubricant candidates in accordance with the friction coefficient.

## ADVANTAGEOUS EFFECTS OF THE INVENTION

According to one aspect of the present disclosure, the friction coefficient between the resin layer and the mold layer via the lubrication layer can be stably determined with a small amount of calculation.

## BRIEF DESCRIPTION OF THE DRAWINGS

[FIG. 1] FIG. 1 is a cross-sectional diagram illustrating an example of a power storage device packaging material.
[FIG. 2] FIG. 2 is a block diagram illustrating an example of an overall configuration of a design support system.

[FIG. 3] FIG. 3 is a block diagram illustrating an example of a hardware configuration of a computer.
[FIG. 4] FIG. 4 is a block diagram illustrating an example of a functional configuration of the design support system.
[FIG. 5] FIG. 5 is a flowchart illustrating an example of an analysis process.
[FIG. 6] FIG. 6 is a flowchart illustrating an example of a selection process.
[FIG. 7] FIG. 7 is a block diagram illustrating an example of a functional configuration of a friction coefficient estimation apparatus.
[FIG. 8] FIG. 8 is a schematic diagram illustrating an example of a resin layer model.
[FIG. 9] FIG. 9 is a schematic diagram illustrating an example of a mold layer model.
[FIG. 10] FIG. 10(A) is a schematic diagram illustrating an example of relaxation simulation of a friction layer model; FIG. 10(B) is a schematic diagram illustrating an example of relaxation simulation of the friction layer model; FIG. 10(C) is a schematic diagram illustrating an example of relaxation simulation of the friction layer model; and FIG. 10(D) is a schematic diagram illustrating an example of relaxation simulation of the friction layer model.
[FIG. 11] FIG. 11 illustrates an example of calculation results of known lubricants.
[FIG. 12] FIG. 12(A) is a schematic diagram illustrating an example of relaxation simulation of a lubrication surface model; FIG. 12(B) is a schematic diagram illustrating an example of relaxation simulation of the lubrication surface model; FIG. 12(C) is a schematic diagram illustrating an example of relaxation simulation of the lubrication surface model; and FIG. 12(D) is a schematic diagram illustrating an example of relaxation simulation of the lubrication surface model.
[FIG. 13] FIG. 13 illustrates an example of calculation results of lubricant candidates.
[FIG. 14A] FIG. 14A is a graph illustrating an example of experimental results regarding the friction coefficient on a CPP plane.
[FIG. 14B] FIG. 14B is a graph illustrating an example of experimental results regarding the friction coefficient on a PET plane.

DESCRIPTION OF THE EMBODIMENTS

Hereinafter, embodiments of the present disclosure will be described with reference to the attached drawings. Note that, in the present specification and the drawings, the components having substantially the same functional configurations are given the same symbols, and duplicate description will be omitted.

[Embodiments]

An embodiment of the present disclosure is a design support system configured to support the design of a power storage device packaging material. The design support system in the present embodiment has the function of selecting a lubricant to be added to the base layer of the power storage device packaging material.

<Power Storage Device Packaging material>

The power storage device packaging material to be designed in the present embodiment will be described with reference to FIG. 1. FIG. 1 is a cross-sectional diagram illustrating an example of the power storage device packaging material in the present embodiment.
As illustrated in FIG. 1, a power storage device packaging material 91 in the present embodiment has a structure in which a base layer 92, a metal foil layer 93, and a sealant layer 94 are stacked and integrated together. The base layer 92 and the metal foil layer 93 are stacked and integrated together via an unillustrated adhesive layer. Similarly, the metal foil layer 93 and a sealant layer 94 are stacked and integrated together via an unillustrated adhesive layer.
The base layer 92 is a member having a main role in ensuring formability that is favorable as a packaging material. The base layer 92 is formed by a heat-resistant resin stretched film. An example of the heat-resistant resin is polyethylene terephthalate (PET) or the like.
The metal foil layer 93 is a member having a main role in providing the power storage device packaging material 91 with gas barrier properties that prevent the entry of oxygen and moisture. The metal foil layer 93 is formed by an aluminum foil, a copper foil, a nickel foil, a stainless steel foil, or the like.
The sealant layer 94 is a member having a main role in providing the power storage device packaging material 91 with chemical resistance to highly corrosive electrolytic liquid or the like, and with heat sealability. The sealant layer 94 is formed by a thermoplastic resin unstretched film. An example of the thermoplastic resin unstretched film is cast polypropylene (CPP). A lubricant formed mainly of a fatty acid amide is added to the sealant layer 94. The lubricant bleeds out from the sealant layer 94, thereby forming a lubrication layer 95.
The power storage device packaging material 91 is typically wound into a roll for storage. FIG. 1 illustrates a state in which a power storage device packaging material 91-1, which is the outermost packaging material, is attached for

storage to a power storage device packaging material 91-2, which is the second outermost packaging material. As illustrated in FIG. 1, a lubrication layer 95-1 of the power storage device packaging material 91-1 located outside is stored in close contact with a base layer 92-2 of the power storage device packaging material 91-2 located inside. Therefore, a lubricant that forms the lubrication layer 95-1 is transferred to the base layer 92-2, thereby forming a lubrication layer outside the base layer 92-2.

By processing the power storage device packaging material 91 in the present embodiment into a three-dimensional shape, such as a substantially rectangular parallelepiped shape or the like, through overhang forming, deep draw forming, or the like, a power storage device packaging casing can be obtained. The power storage device packaging material 91 in the present embodiment can be used as is without any processing.

An example of the power storage device in the present embodiment is a lithium ion secondary battery. However, use of the power storage device packaging material 91 in the present embodiment is not limited to the use for a lithium ion secondary battery.

<Overall Configuration of Design Support System>

The overall configuration of the design support system in the present embodiment will be described with reference to FIG. 2. FIG. 2 is a block diagram illustrating an example of the overall configuration of the design support system in the present embodiment.

As illustrated in FIG. 2, a design support system 1 in the present embodiment includes a lubricant selection apparatus 10 and a user terminal 30. The lubricant selection apparatus 10 and the user terminal 30 are connected via a communication network N1, such as a LAN (Local Area Network), the Internet, or the like, so as to enable data communication.

The lubricant selection apparatus 10 is an information processing apparatus, such as a personal computer, a workstation, a server, or the like, configured to select a lubricant to be used for the production of the power storage device packaging material 91. The lubricant selection apparatus 10 receives lubricant information on known lubricants from the user terminal 30, and derives a regression formula for estimating a friction coefficient. The lubricant selection apparatus 10 receives lubricant information on lubricant candidates from the user terminal 30, and selects a lubricant to be used for the production of the power storage device packaging material 91 in accordance with the friction coefficient estimated for each of the lubricant candidates. The lubricant selection apparatus 10 may select a plurality of lubricants that can be used for the production of the power storage device packaging material 91.

The known lubricant is a lubricant that is known to be usable as a lubricant to be added to the base layer 92 of the power storage device packaging material 91. The lubricant candidate is a lubricant that is a candidate of the lubricant to be added to the base layer 92 of the power storage device packaging material 91.

The user terminal 30 is an information processing terminal, such as a personal computer, a tablet terminal, a smartphone, or the like, operated by a user of the design support system 1. The user terminal 30 transmits lubricant information on the known lubricants or the lubricant candidates to the lubricant selection apparatus 10 in response to an operation performed by the user. The user terminal 30 receives a lubricant selection result from the lubricant selection apparatus 10, and outputs the lubricant selection result to the user.

The overall configuration of the design support system 1 illustrated in FIG. 2 is merely an example, and various system configuration examples are possible in accordance with intended uses and purposes. For example, the lubricant selection apparatus 10 may be implemented by a plurality of computers or may be implemented as a cloud computing service. Also, for example, the design support system 1 may be implemented by a stand-alone information processing apparatus having the functions that would be provided by at least both the lubricant selection apparatus 10 and the user terminal 30.

<Hardware Configuration of Design Support System>

The hardware configuration of the design support system 1 in the present embodiment will be described with reference to FIG. 3.

<<Hardware Configuration of Computer>>

The lubricant selection apparatus 10 and the user terminal 30 in the present embodiment are implemented by a computer or the like. FIG. 3 is a block diagram illustrating an example of a hardware configuration of a computer 500 in the present embodiment.

As illustrated in FIG. 3, the computer 500 includes a CPU (Central Processing Unit) 501, a ROM (Read Only Memory) 502, a RAM (Random Access Memory) 503, an HDD (Hard Disk Drive) 504, an input device 505, a display device 506, a communication I/F (Interface) 507, and an external I/F 508. The CPU 501, the ROM 502, and the RAM 503 form what is called a computer. The hardware components of the computer 500 are connected to each other via a bus line 509. The input device 505 and the display device 506 may be in the form of being connected to the external I/F 508 in use.

The CPU 501 is an arithmetic logic unit configured to realize controls and functions of the entire computer 500 by reading out programs and data on the RAM 503 from a storage device such as the ROM 502, the HDD 504, or the like, and performing processing.

The ROM 502 is one example of a non-volatile semiconductor memory (storage device) that retains programs and data even if the power source is turned off. The ROM 502 functions as a main storage device that stores various programs, data, and the like necessary for the CPU 501 to perform various programs installed in the HDD 504. Specifically, the ROM 502 stores a boot program performed upon start-up of the computer 500, such as BIOS (Basic Input/Output System), EFI (Extensible Firmware Interface), and the like, and data for OS (Operating System) setting, network setting, and the like.

The RAM 503 is one example of a volatile semiconductor memory (storage device) from which programs and data are deleted when the power source is turned off. The RAM 503 is a DRAM (Dynamic Random Access Memory), a SRAM (Static Random Access Memory), or the like. The RAM 503 provides a work area into which various programs installed in the HDD 504 are deployed by the CPU 501.

The HDD 504 is one example of a non-volatile storage device that stores programs and data. The programs and data stored in the HDD 504 are: OS that is basic software controlling the entire computer 500; applications that provide various functions on the OS; and the like. The computer 500 may utilize, instead of the HDD 504, a storage device using a flash memory as a storage medium (e.g., SSD: Solid State Drive).

The input device 505 is what is used by a user for inputting various signals, such as a touch panel, an operation key or button, a keyboard or mouse, a microphone in which audio data, such as voice and sound, is input.

The display device 506 is formed of: a display configured to display an image, such as a liquid crystal display, an organic EL (Electro-Luminescence) display, or the like; and a speaker configured to output audio data, such as voice and sound; and the like.

A communication I/F 507 is an interface that is connected to a communication network and in which the computer 500 performs data communication.

The external I/F 508 is an interface with an external device. The external device is a drive device 510 or the like.

The drive device 510 is a device in which a recording medium 511 is set. As used herein, the recording medium 511 includes CD-ROMs, flexible disks, and media configured to optically, electrically, or magnetically record information, such as magneto-optical disks and the like. Also, the recording medium 511 may include semiconductor memories configured to electrically record information, such as ROMs, flash memories, and the like. Thereby, the computer 500 can read from and write to the recording medium 511 via the external I/F 508.

For example, various programs to be installed in the HDD 504 are installed when the recording medium 511 delivered is set in the drive device 510 connected to the external I/F 508, and various programs stored in the recording medium 511 are read out by the drive device 510. Alternatively, various programs to be installed in the HDD 504 may be installed by being downloaded from a network different from the communication network via the communication I/F 507.

<Functional Configuration of Design Support System>

The functional configuration of the design support system in the present embodiment will be described with reference to FIG. 4. FIG. 4 is a block diagram illustrating an example of the functional configuration of the design support system 1 in the present embodiment.

<<Functional Configuration of Lubricant Selection Apparatus>>

As illustrated in FIG. 4, the lubricant selection apparatus 10 in the present embodiment includes a lubricant information input unit 101, a model construction unit 102, a friction coefficient calculation unit 103, an energy calculation unit 104, a regression formula generation unit 105, a friction coefficient estimation unit 106, an analysis result storage unit 107, and a lubricant selection unit 108.

The lubricant information input unit 101, the model construction unit 102, the friction coefficient calculation unit 103, the energy calculation unit 104, the regression formula generation unit 105, the friction coefficient estimation unit 106, and the lubricant selection unit 108 are implemented through processing that is executed by the CPU 501 in accordance with programs deployed on the RAM 503 from the HDD 504 illustrated in FIG. 3. The analysis result storage unit 107 is implemented by the HDD 504 illustrated in FIG. 3.

The lubricant information input unit 101 is configured to receive an input of lubricant information by receiving the lubricant information from the user terminal 30. In an analysis process, the lubricant information input unit 101 receives an input of a known lubricant list including lubricant information on a plurality of known lubricants. In a selection process, the lubricant information input unit 101 receives an input of a lubricant candidate list including lubricant information on a plurality of lubricant candidates.

The model construction unit 102 is configured to construct a friction layer model to be used by the friction coefficient calculation unit 103 for friction molecular dynamics calculation, and a lubrication surface model to be used by the energy calculation unit 104 for molecular dynamics calculation.

The model construction unit 102 first constructs a structural model of lubricant molecules (hereinafter also referred to as a "lubricant molecular model"), a structural model of the base layer 92 (hereinafter also referred to as a "resin layer model"), and a structural model of a mold used for processing of the power storage device packaging material 91 (hereinafter also referred to as a "mold layer model"). Next, the model construction unit 102 constructs a friction layer model by using the lubricant molecular model, the resin layer model, and the mold layer model. Also, the model construction unit 102 constructs a lubrication surface model by using the lubricant molecular model and the resin layer model.

The friction coefficient calculation unit 103 is configured to execute friction molecular dynamics calculation by using the friction layer model that is constructed by the model construction unit 102. The friction coefficient calculation unit 103 calculates a friction coefficient between the resin layer and the mold layer via the lubrication layer formed by a known lubricant.

The energy calculation unit 104 is configured to execute molecular dynamics calculation by using the lubrication surface model that is constructed by the model construction unit 102. The energy calculation unit 104 calculates the interaction energy between the lubrication layer, formed by the lubricant, and the resin layer.

The regression formula generation unit 105 is configured to derive a regression formula expressing a correlation between the friction coefficient regarding the known lubricant calculated by the friction coefficient calculation unit 103, and the interaction energy regarding the known lubricant calculated by the energy calculation unit 104. The regression formula generation unit 105 stores the derived regression formula in the analysis result storage unit 107.

The friction coefficient estimation unit 106 is configured to estimate a friction coefficient regarding the lubricant from the interaction energy regarding the lubricant calculated by the energy calculation unit 104. The friction coefficient estimation unit 106 estimates a friction coefficient regarding the lubricant in accordance with the regression formula derived by the regression formula generation unit 105. When the friction coefficient estimation unit 106 estimates the friction coefficient regarding the known lubricant, the estimated friction coefficient is stored in the analysis result storage unit 107.

An analysis result indicating the result analyzed in the analysis process is stored in the analysis result storage unit 107. The analysis result includes the regression formula derived by the regression formula generation unit 105, and the friction coefficient regarding the known lubricant estimated by the friction coefficient estimation unit 106.

The lubricant selection unit 108 selects, from the lubricant candidate list, a lubricant to be used for the production of the power storage device packaging material 91, in accordance with the friction coefficients regarding the lubricant candidates estimated by the friction coefficient estimation unit 106. The lubricant selection unit 108 selects a lubricant by comparing the friction coefficients regarding the lubricant candidates with the friction coefficients regarding the known lubricants stored in the analysis result storage unit 107.

<<Functional Configuration of User Terminal 30>>

As illustrated in FIG. 4, the user terminal 30 in the present embodiment includes a lubricant information storage unit 300, a lubricant information generation unit 301, and a result display unit 302.

The lubricant information generation unit 301 and the result display unit 302 are implemented through processing that is executed by the CPU 501 in accordance with programs deployed on the RAM 503 from the HDD 504 illustrated in FIG. 3. The lubricant information storage unit 300 is implemented by the HDD 504 illustrated in FIG. 3.

The lubricant information storage unit 300 is configured to store lubricant information on substances that are usable as a lubricant. The substances that are usable as a lubricant include known lubricants used for the production of the power storage device packaging material 91 and lubricant candidates that are not used for the production of the power storage device packaging material 91.

The lubricant information includes identification information that identifies a lubricant molecule. The identification information includes a compound name, a structural formula, SMILES (Simplified Molecular Input Line Entry System) information, ECFP (Extended Connectivity Circular Fingerprints) information, and the like. The identification information is not limited to these, and various items of information that can identify a lubricant molecule can be used.

The lubricant information generation unit 301 is configured to receive an input of lubricant information in response to an operation performed by the user. The lubricant information generation unit 301 transmits the received lubricant information to the lubricant selection apparatus 10.

The result display unit 302 is configured to receive the lubricant selection result from the lubricant selection apparatus 10. The result display unit 302 outputs the received lubricant selection result to the display device 506 or the like.

<Procedure of Process of Design Support System>

The procedure of a process of the lubricant selection method executed by the design support system 1 in the present embodiment will be described with reference to FIGS. 5 and 6. The lubricant selection method in the present embodiment includes an analysis process that analyzes the relationship between the friction coefficient and the interaction energy (see FIG. 5) and a selection process that selects a lubricant in accordance with the analysis result (see FIG. 6).

<<Analysis Process>>

FIG. 5 is a flowchart illustrating an example of the analysis process in the present embodiment. The analysis process is a process that analyzes the relationship between the interaction energy and the friction coefficient regarding the known lubricants, and derives a regression formula for estimating the friction coefficient.

In step S1, the lubricant information generation unit 301 of the user terminal 30 generates a known lubricant list in response to an operation performed by the user. The known lubricant list is generated by selecting lubricant information regarding the known lubricants from the lubricant information stored in the lubricant information storage unit 300. Next, the lubricant information generation unit 301 transmits the generated known lubricant list to the lubricant selection apparatus 10.

The lubricant information input unit 101 of the lubricant selection apparatus 10 receives the known lubricant list from the user terminal 30. Next, the lubricant information input unit 101 receives an input of the received known lubricant list. Subsequently, the lubricant information input unit 101 transmits the received known lubricant list to the model construction unit 102.

In step S2, the model construction unit 102 of the lubricant selection apparatus 10 receives the known lubricant list from the lubricant information input unit 101. Next, the model construction unit 102 generates a lubricant molecular model of the known lubricant included in the known lubricant list by using quantum chemical calculation. The model construction unit 102 also generates a resin layer model corresponding to the base layer 92 and a mold layer model corresponding to the mold, by using quantum chemical calculation.

(Lubricant Molecular Model)

The lubricant molecule used for the power storage device packaging material 91 is, for example, a hydrocarbon compound having a polar group, such as an amide group or the like. The molecular weight of the lubricant molecule is, for example, from about 100 through about 1,000.

Formula (1) is a general formula that represents an example of the lubricant molecule calculated in the present embodiment.

[Chem. 1]

$$R1\text{-}X\text{-}R2 \cdots \quad (1)$$

In Formula (1), X is an amide group. R1 and R2 are a first terminal bonded to the nitrogen atom of the amide group and a second terminal bonded to the carbon atom of the amide group, respectively. R1 and R2 include at least one of hydrogen, hydrocarbon, amide group-containing hydrocarbon, or hydroxyl group-containing hydrocarbon. The structures of R1 and R2 may be the same or different.

Structural optimization using quantum chemical calculation is performed on the lubricant molecule as described above, thereby constructing a lubricant molecular model. The lubricant molecular model has information on the molecular structure and the charge of each atom, and thus can be appropriately used in molecular dynamics calculation.

(Resin Layer Model)

The resin layer is formed, for example, of a polymer, such as cast polypropylene or polyethylene terephthalate. The resin layer may contain a single component or a plurality of components.

Structural optimization using quantum chemical calculation is performed on a single repeating structural unit of the polymer chain of the resin layer as described above. The optimized single repeating structural unit is repeatedly bonded, thereby constructing a model of a single polymer chain of the resin layer. The model of the single polymer chain of the resin layer has information on the molecular structure and the charge of each atom, and thus can be appropriately used in molecular dynamics calculation.

(Mold Layer Model)

The mold layer is formed of a single metal or an alloy formed of a plurality of metals. The alloy is stainless steel or the like.

The unit structure of the mold layer as described above is provided as a structure in which atoms are arranged so as to form the most stable surface and appropriate charges are assigned to each atom. This unit structure is repeated in a planar direction within the range of a periodic boundary cell used in molecular dynamics calculation, thereby constructing a mold layer model. The mold layer model has information on the structure and the charge of each atom, and thus can be appropriately used in molecular dynamics calculation.

In step S3, the model construction unit 102 of the lubricant selection apparatus 10 constructs a friction layer model corresponding to the known lubricant by using the lubricant molecular model of the known lubricant, the resin layer model, and the mold layer model. The model construction unit 102 transmits the generated friction layer model to the friction coefficient calculation unit 103.

The friction layer model constructed for executing molecular dynamics calculation may be such that the lubricant molecular models are arranged somewhat uniformly between the resin layer model and the mold layer model. Preferably, the friction layer model is constructed in a periodic boundary cell having an enough size for arrangement of about 10 through about 100 lubricant molecules.

As to a method of arranging the lubricant molecules in an initial state of the friction layer model, the lubricant molecules may be arranged as desired near the resin layer model and the mold layer model such that the individual lubricant molecules do not overlap with each other. Alternatively, an initial arrangement stabilized by using molecular dynamics calculation or the like may be provided.

In step S4, the friction coefficient calculation unit 103 of the lubricant selection apparatus 10 receives the friction layer model corresponding to the known lubricant from the model construction unit 102. Next, the friction coefficient calculation unit 103 executes friction molecular dynamics calculation by using the received friction layer model.

The friction coefficient calculation unit 103 executes friction molecular dynamics calculation, for example, under the following conditions. That is, for the friction molecular dynamics calculation, a shear is applied to the mold layer while a pressure is being applied to the mold layer. The conditions of the friction molecular dynamics calculation are not limited to the following.

- Cell size: 50 Å×50 Å×150 Å (periodic boundary cell)
- Tracking time: 20 ns (the time per step: 1 ps, the total number of steps: 20 million steps)
- Temperature: 300 K (assuming room temperature)
- Molecular force field: DREIDING force field
- Calculation method of Coulomb interaction: Particle-Particle Particle-Mesh Ewald method
- Pressure applied to the mold layer: 0.25 MPa
- Shearing rate of the mold layer: 10.0 mm/s

In step S5, the friction coefficient calculation unit 103 of the lubricant selection apparatus 10 calculates the friction coefficient between the resin layer and the mold layer via the lubrication layer formed by the known lubricant, in accordance with the result of the friction molecular dynamics calculation in step S4. Next, the friction coefficient calculation unit 103 transmits the calculated friction coefficient to the regression formula generation unit 105.

For the friction molecular dynamics calculation, a shear is applied to the mold layer while a pressure is being applied to the mold layer. Therefore, friction occurs as a whole of the friction layer model. In the present embodiment, of the forces acting in each direction between the molecules of the resin layer and the molecules of the mold layer, the force in the shearing direction of the mold layer is divided by the force in the pressurizing direction of the mold layer, and the obtained value is defined as a "friction coefficient".

In step S6, the model construction unit 102 of the lubricant selection apparatus 10 constructs a lubrication surface model corresponding to the known lubricant by using the lubricant molecular model of the known lubricant and the resin layer model. The model construction unit 102 transmits the generated lubrication surface model to the energy calculation unit 104.

The lubrication surface model constructed for executing molecular dynamics calculation may be such that the lubricant molecular models are arranged on the resin layer model somewhat uniformly. Preferably, the lubrication surface model is constructed in a periodic boundary cell having an enough size for arrangement of about 10 through about 100 lubricant molecules.

As to a method of arranging the lubricant molecules in an initial state of the lubrication surface model, the lubricant molecules may be arranged as desired near the resin layer model such that the individual molecules do not overlap with each other. Alternatively, an initial arrangement stabilized by using molecular dynamics calculation or the like may be provided.

In step S7, the energy calculation unit 104 of the lubricant selection apparatus 10 receives the lubrication surface model corresponding to the known lubricant from the model construction unit 102. Next, the energy calculation unit 104 executes molecular dynamics calculation by using the received lubrication surface model.

The energy calculation unit 104 executes the molecular dynamics calculation, for example, under the following conditions. The conditions of the molecular dynamics calculation are not limited to the following.

- Cell size: 50 Å×50 Å×150 Å (periodic boundary cell)

- Tracking time: 2 ns (the time per step: 1 ps, the total number of steps: 2 million steps)
- Temperature: 300 K (assuming room temperature)
- Molecular force field: DREIDING force field
- Calculation method of Coulomb interaction: Particle-Particle Particle-Mesh Ewald method

In step S8, the energy calculation unit 104 of the lubricant selection apparatus 10 calculates the interaction energy between the lubrication layer, formed by the known lubricant, and the resin layer in accordance with the result of the molecular dynamics calculation in step S7. Next, the energy calculation unit 104 transmits the calculated interaction energy to the regression formula generation unit 105 and the friction coefficient estimation unit 106.

When the lubricant molecules approach the resin layer and are adsorbed to the resin layer in the molecular dynamics calculation, the total energy of the system becomes stable compared to a case in which the lubricant molecules are not adsorbed to the resin layer. In the present embodiment, the energy calculated in the stabilized state is defined as an "interaction energy".

The process of from step S2 to step S8 is repeatedly executed for each of the known lubricants included in the known lubricant list. As a result, sets of the friction coefficient and the interaction energy are obtained for all of the known lubricants included in the known lubricant list.

In step S9, the regression formula generation unit 105 of the lubricant selection apparatus 10 receives the friction coefficient regarding each known lubricant from the friction coefficient calculation unit 103. Also, the regression formula generation unit 105 receives the interaction energy regarding each known lubricant from the energy calculation unit 104.

Next, the regression formula generation unit 105 generates analysis data by combining the friction coefficient and the interaction energy regarding the same known lubricant. Subsequently, the regression formula generation unit 105 derives a regression formula expressing the correlation between the friction coefficient and the interaction energy in accordance with the generated analysis data. The regression formula generation unit 105 stores the derived regression formula in the analysis result storage unit 107.

In step S10, the friction coefficient estimation unit 106 of the lubricant selection apparatus 10 reads out the regression formula stored in the analysis result storage unit 107. Next, the friction coefficient estimation unit 106 receives the interaction energy regarding each known lubricant from the energy calculation unit 104. Subsequently, the friction coefficient estimation unit 106 estimates the friction coefficient regarding each known lubricant in accordance with the read-out regression formula. The friction coefficient estimation unit 106 stores the estimated friction coefficient in the analysis result storage unit 107.

<<Selection Process>>

FIG. 6 is a flowchart illustrating an example of the selection process in the present embodiment. The selection process is a process that estimates the friction coefficient regarding the lubricant candidates by using the regression formula derived in the analysis process, and selects a lubricant to be used for the production of the power storage device packaging material 91.

In step S11, the lubricant information generation unit 301 of the user terminal 30 generates a lubricant candidate list in response to an operation performed by the user. The lubricant candidate list is generated by selecting lubricant information on lubricant candidates from the lubricant information stored in the lubricant information storage unit 300. Next, the lubricant information generation unit 301 transmits the generated lubricant candidate list to the lubricant selection apparatus 10.

The lubricant information input unit 101 of the lubricant selection apparatus 10 receives the lubricant candidate list from the user terminal 30. Next, the lubricant information input unit 101 receives an input of the received lubricant candidate list. Subsequently, the lubricant information input unit 101 transmits the received lubricant candidate list to the model construction unit 102.

In step S12, the model construction unit 102 of the lubricant selection apparatus 10 receives the lubricant candidate list from the lubricant information input unit 101. Next, the model construction unit 102 generates a lubricant molecular model of the lubricant candidate included in the lubricant candidate list by using quantum chemical calculation. The generated lubricant molecular model is similar to the lubricant molecular model of the known lubricant.

In step S13, the model construction unit 102 of the lubricant selection apparatus 10 constructs a lubrication surface model corresponding to the lubricant candidates by using the lubricant molecular model of the lubricant candidate and the resin layer model. The resin layer model to be used may be the resin layer model generated in step S2 of the analysis process. The generated lubrication surface model is similar to the lubrication surface model corresponding to the known lubricant. The model construction unit 102 transmits the generated lubrication surface model to the energy calculation unit 104.

In step S14, the energy calculation unit 104 of the lubricant selection apparatus 10 receives the lubrication surface model corresponding to the lubricant candidate from the model construction unit 102. Next, the energy calculation

unit 104 executes molecular dynamics calculation by using the received lubrication surface model. The conditions of the molecular dynamics calculation are similar to those in step S7.

In step S15, the energy calculation unit 104 of the lubricant selection apparatus 10 calculates the interaction energy between the lubrication layer, formed by the lubricant candidate, and the resin layer in accordance with the result of the molecular dynamics calculation in step S14. Next, the energy calculation unit 104 transmits the calculated interaction energy to the friction coefficient estimation unit 106.

In step S16, the friction coefficient estimation unit 106 of the lubricant selection apparatus 10 reads out the regression formula stored in the analysis result storage unit 107. Next, the friction coefficient estimation unit 106 receives the interaction energy regarding the lubricant candidate from the energy calculation unit 104. Subsequently, the friction coefficient estimation unit 106 estimates the friction coefficient regarding the lubricant candidate in accordance with the read-out regression formula. The friction coefficient estimation unit 106 transmits the estimated friction coefficient to the lubricant selection unit 108.

The process of from step S12 to step S16 is repeatedly executed for each of the candidate lubricants included in the candidate lubricant list. As a result, an estimated value of the friction coefficient is obtained for all of the lubricant candidates included in the lubricant candidate list.

In step S17, the lubricant selection unit 108 of the lubricant selection apparatus 10 receives the friction coefficient regarding each lubricant candidate from the friction coefficient estimation unit 106. Next, the lubricant selection unit 108 reads out the friction coefficient regarding each known lubricant stored in the analysis result storage unit 107.

Subsequently, the lubricant selection unit 108 compares the received friction coefficient regarding each lubricant candidate with the read-out friction coefficient regarding each known lubricant. Next, the lubricant selection unit 108 selects a lubricant to be used for the production of the power storage device packaging material 91 in accordance with the comparison result of the friction coefficients.

The lubricant selection unit 108 selects a lubricant candidate having a friction coefficient that is lower than the friction coefficients regarding all of the known lubricants. When there are a plurality of lubricant candidates having a friction coefficient that is lower than the friction coefficients regarding all of the known lubricants, the lubricant selection unit 108 may select the lubricant candidate having the lowest friction coefficient. Also, the lubricant selection unit 108 may select all of the lubricant candidates having a friction coefficient that is lower than the friction coefficients regarding all of the known lubricants.

In step S18, the lubricant selection unit 108 of the lubricant selection apparatus 10 transmits the lubricant selection result to the user terminal 30. The lubricant selection result includes a selected lubricant list including lubricant information on the lubricant selected in step S17. When no lubricant is selected in step S17 (i.e., when there is no lubricant candidate having a friction coefficient that is lower than the friction coefficients regarding all of the known lubricants), the lubricant selection result includes information indicating that no lubricant is selected.

The result display unit 302 of the user terminal 30 receives the lubricant selection result from the lubricant selection apparatus 10. Next, the result display unit 302 outputs the received lubricant selection result to the display device 506 or the like.

The user determines a lubricant to be used for the production of the power storage device packaging material 91 in accordance with the lubricant selection result. The user may perform an experiment or the like using the lubricant selected by the lubricant selection apparatus 10, and determine a lubricant to be used for the production in accordance with an experimental result.

The lubricant determined by the user is added to a resin for forming the base layer 92 of the power storage device packaging material 91. The power storage device packaging material 91 is produced by sequentially stacking the base layer 92 to which the determined lubricant is added, the metal foil layer 93, and the sealant layer 94. By winding the produced power storage device packaging material 91 into a roll for storage, the lubricant bleeds out from the base layer 92 over time, thereby forming the lubrication layer 95.

<Effects of Embodiments>

The lubricant selection apparatus 10 in the present embodiment estimates the friction coefficient between the resin layer and the mold layer via the lubrication layer formed by lubricant molecules, in accordance with the interaction energy between the lubricant molecules and the resin layer. The interaction energy between the lubricant molecules and the resin layer can be stably determined with an amount of calculation that is smaller than that for the friction coefficient regarding the lubricant molecules. Therefore, according to the lubricant selection apparatus 10 in the present embodiment, the friction coefficient between the resin layer and the mold layer via the lubrication layer can be stably determined with a small amount of calculation.

The lubricant selection apparatus 10 in the present embodiment calculates the friction coefficient between the resin layer and the mold layer via the lubrication layer, formed by the lubricant molecules, from the interaction energy between the lubricant molecules and the resin layer in accordance with the regression formula expressing the relationship

between the interaction energy and the friction coefficient regarding the known lubricants. Therefore, according to the lubricant selection apparatus 10 in the present embodiment, the friction coefficient between the resin layer and the mold layer via the lubrication layer can be stably determined with a small amount of calculation.

The lubricant selected by the lubricant selection apparatus 10 in the present embodiment may be used as a lubricant to be added to the resin layer in the power storage device packaging material including the resin layer, the sealant layer, and the metal foil layer disposed between the resin layer and the sealant layer. The selected lubricant has a friction coefficient that is lower than the friction coefficient regarding the known lubricant. Thus, the power storage device packaging material including the resin layer to which the selected lubricant is added is increased in formability. Therefore, according to the lubricant selection apparatus 10 in the present embodiment, it is possible to produce the power storage device packaging material having increased formability.

[Modified Example]

The lubricant selection apparatus 10 according to the above-described embodiments is configured to estimate the friction coefficient of each of the plurality of lubricant candidates, and select a lubricant in accordance with the estimated friction coefficients. In the present modified example, the lubricant selection apparatus 10 in the embodiment is configured as a friction coefficient estimation apparatus configured to estimate the friction coefficient regarding a single lubricant.

<<Functional Configuration of Friction Coefficient Estimation Apparatus>>

The friction coefficient estimation apparatus in the present modified example will be described with reference to FIG. 7. FIG. 7 is a block diagram illustrating an example of a functional configuration of the friction coefficient estimation apparatus in the present modified example.

As illustrated in FIG. 7, a friction coefficient estimation apparatus 20 in the present modified example includes the lubricant information input unit 101, the model construction unit 102, the friction coefficient calculation unit 103, the energy calculation unit 104, the regression formula generation unit 105, the friction coefficient estimation unit 106, and the analysis result storage unit 107, similar to the lubricant selection apparatus 10 in the embodiment. That is, the friction coefficient estimation apparatus 20 is different from the lubricant selection apparatus 10 in that the friction coefficient estimation apparatus 20 does not include the lubricant selection unit 108.

In the present modified example, the lubricant candidate list received by the lubricant information input unit 101 includes information on a single lubricant candidate only. Therefore, the energy calculation unit 104 calculates the interaction energy regarding the sole lubricant candidate, and the friction coefficient estimation unit 106 estimates and outputs the friction coefficient regarding the sole lubricant candidate.

<Effects of Modified Example>

The friction coefficient estimation apparatus 20 in the present modified example estimates the friction coefficient between the resin layer and the mold layer via the lubrication layer formed by lubricant molecules, in accordance with the interaction energy between the lubricant molecules and the resin layer. Therefore, according to the friction coefficient estimation apparatus 20 in the present embodiment, the friction coefficient between the resin layer and the mold layer via the lubrication layer can be stably determined with a small amount of calculation.

[Examples]

Examples that specifically describe the above-described embodiments will be described. The above-described embodiments are not limited to the Examples described below.

(Lubricant Molecule)

Lubricant molecules of formulae (2) to (7) were used as the lubricant molecules represented by the general formula of Formula (1).

[Chem. 2]

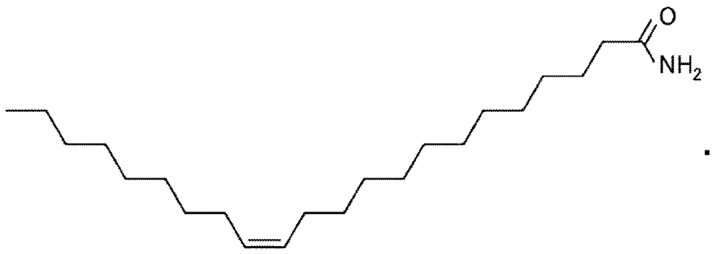

···(2)

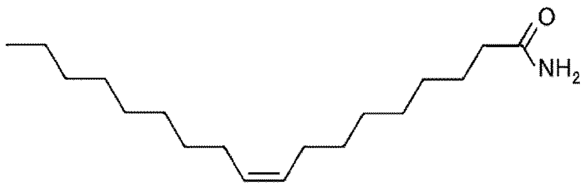

···(3)

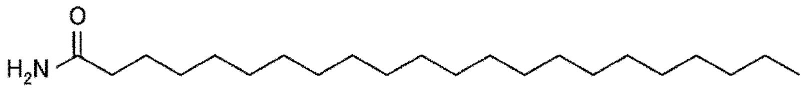

···(4)

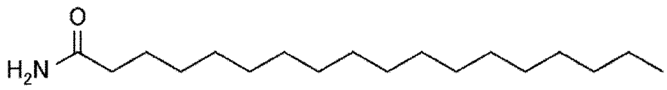

···(5)

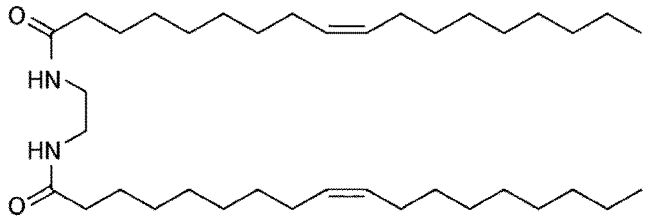

···(6)

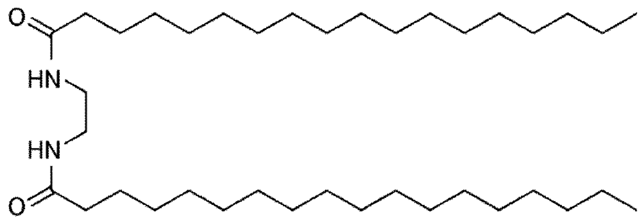

···(7)

Formula (2) is a structural formula of erucic acid amide (EA). Formula (3) is a structural formula of oleic acid amide (OA). Formula (4) is a structural formula of behenic acid amide (BA). Formula (5) is a structural formula of stearic acid amide (SA). Formula (6) is a structural formula of ethylenebisoleic acid amide (EBOA). Formula (7) is a structural formula of ethylenebisstearic acid amide (EBSA).

The following simulation was performed on the lubricant molecules of Formulae (2) to (7).

<Simulation>

(Resin Layer)

FIG. 8 is a schematic diagram illustrating an example of a resin layer model used for the simulation. As illustrated in FIG. 8, the simulation used a resin layer in which twenty PET molecules, each having a degree of polymerization of 20, were randomly arranged in a cell of 50 Å×50 Å×20 Å using random numbers.

(Mold Layer)

FIG. 9 is a schematic diagram illustrating an example of a mold layer model used for the simulation. As illustrated

in FIG. 9, the (111) plane of iron is used as the mold layer for the simulation.

<<Construction of Models of Lubricant Molecule, Resin Layer, and Mold Layer (Step S2)>>

For the unit structure of the lubricant molecule and the resin layer, the stable structure and the charges of each atom were determined through quantum chemical calculation. The lubricant molecule and the resin layer were subjected to structural optimization for calculating the stable structures, and then the atomic charges in the obtained structures were calculated. For the mold layer model, iron atoms were arranged so as to form the (111) plane, and the charges of each atom were set to 0.

For both of the calculations of the stable structures of the lubricant molecule and the resin layer, ωB97xd/6-31+G* was used as a combination of a parameter/a basis function of the density functional method, and the atomic charges in the determined stable structures were calculated through Mulliken population analysis. For these quantum chemical calculations, the GAUSSIAN (registered trademark) 16 program package obtained from Gaussian Inc. was used.

<<Construction of Friction Layer Model (Step S3)>>

The friction layer model was constructed by disposing the lubricant molecular model on the mold layer model, and further disposing the resin layer model on the lubricant molecular model.

<<Implementation of Friction Molecular Dynamics Calculation (Step S4)>>

Friction molecular dynamics calculation was implemented in the following two steps. The first step is to perform preparatory calculation (hereinafter referred to as "relaxation simulation") that brings an artificially constructed friction layer model closer to a natural state. The second step is to perform main calculation (hereinafter referred to as "friction simulation") that tracks the actual movement of the friction layer from the constructed friction layer model.

(Relaxation Simulation)

An initial state of the friction layer model, i.e., an initial structure for the friction simulation, was constructed by using the lubricant molecular model and the resin layer model that include the stable structures and information indicating the charges of each atom. In the present example, relaxation simulation was performed on the friction layer model in the initial state in order to reproduce a state in which the lubricant molecules are uniformly distributed between the resin layer and the mold layer at room temperature (300 K).

The conditions for the relaxation simulation were set as follows. The DREIDING force field was used as the molecular force field. The cutoff method was used for the Lennard-Jones interaction. The cutoff distance was set to 12 Å at which the interaction was considered negligible. The Nose-Hoover method was used as a temperature control method, thereby performing simulation by the NVT ensemble in which the number of particles (N), the volume (V), and the temperature (T) were constant. Molecular dynamics calculation was executed using the 29Oct20 version of free software LAMMPS (Large-scale Atomic/Molecular Massively Parallel Simulator).

FIGS. 10(A) to (D) are schematic diagrams illustrating an example of relaxation simulation of the friction layer model. First, as illustrated in FIG. 10(A), the unit structures of the mold layer were densely arranged in a periodic boundary cell of 50 Å×50 Å×150 Å, thereby forming a mold layer 81. Assuming that the positions of the atoms in the mold layer 81 would not be changed during the relaxation simulation, the positions of the atoms were fixed.

Next, as illustrated in FIG. 10(B), lubricant molecules 82 were randomly disposed above the surface of the mold layer 81. Experimentally, it has been found from previous measurements that a lubrication layer having a film thickness substantially equal to that of a bilayer membrane is formed. For comparison with the physical properties obtained in the experiments, the number of the lubricant molecules 82 was adjusted such that a formed lubrication layer 84 illustrated in FIG. 10(D) would have a film thickness substantially equal to that of a bilayer membrane in the thermal equilibrium state at room temperature.

Subsequently, as illustrated in FIGS. 10(C) and (D), a downward force was applied to a resin layer 83 and the lubricant molecules 82, and molecular dynamics calculation was executed under an ambient temperature of 300 K, thereby lowering the resin layer 83 and the lubricant molecules 82 to form the lubrication layer 84 on the surface of the mold layer 81. In this manner, the friction layer model was formed. Here, FIG. 10(C) illustrates the structure of the friction layer model during the molecular dynamics calculation, and FIG. 10(D) illustrates the structure of the friction layer model after the calculation of 30 ps.

(Friction Simulation)

The conditions for the friction simulation were set as follows. The DREIDING force field was used as the molecular force field. The cutoff method was used for the Lennard-Jones interaction. The cutoff distance was set to 12 Å at which the interaction was considered negligible. The Particle-Particle Particle-Mesh Ewald method was used for calculation of a long-range Coulomb interaction. The Nose-Hoover method was used as a temperature control method, thereby performing simulation by the NVT ensemble in which the number of particles (N), the volume (V), and the temperature (T) were constant. Friction was reproduced by applying a vertical upward pressure of 0.25 MPa to the mold layer and a shearing rate of 10.0 mm/s in the horizontal direction. Molecular dynamics calculation was executed using free software LAMMPS.
For the friction simulation, the structure and the behaviors of the friction layer at 300 K were reproduced and analyzed.

<<Calculation of Friction Coefficient (Step S5)>>

FIG. 11 is a table illustrating calculation results regarding known lubricants. FIG. 11 illustrates friction coefficients (calculated values) that were calculated for each lubricant molecule. Here, erucic acid amide (EA) of No. 1-1 is a lubricant molecule used as a reference of friction. That is, lubricant molecules having a friction coefficient lower than that of erucic acid amide (EA) were used as lubricant molecules capable of forming a lubrication layer being more excellent in friction.
According to the friction coefficients (calculated values) illustrated in FIG. 11, for example, when using a lubricant molecule referred to as stearic acid amide (SA) of No. 1-4, a lubrication layer capable of reducing friction is predicted to be formed.

<<Construction of Lubrication Surface Model (Step S6)>>

A lubrication surface model was constructed by disposing the lubricant molecular model on the resin layer model.

<<Implementation of Molecular Dynamics Calculation (Step S7)>>

Molecular dynamics calculation was implemented in the following two steps. The first step is to perform preparatory calculation (hereinafter referred to as "relaxation simulation") that brings an artificially constructed lubrication surface model closer to a natural state. The second step is to perform main calculation (hereinafter referred to as "lubrication surface simulation") that tracks the actual movement of the lubrication surface from the constructed lubrication surface model.

(Relaxation Simulation)

An initial state of the lubrication surface model, i.e., an initial structure for the lubrication surface simulation, was constructed by using the lubricant molecular model and the resin layer model that include the stable structures and information indicating the charges of each atom. In the present example, relaxation simulation was performed on the lubrication surface model in the initial state in order to reproduce a state in which the lubricant molecules are uniformly distributed on the resin at room temperature (300 K).
The conditions for the relaxation simulation were set as follows. The DREIDING force field was used as the molecular force field. The cutoff method was used for the Lennard-Jones interaction. The cutoff distance was set to 12 Å at which the interaction was considered negligible. The Nose-Hoover method was used as a temperature control method, thereby performing simulation by the NVT ensemble in which the number of particles (N), the volume (V), and the temperature (T) were constant. Molecular dynamics calculation was executed using free software LAMMPS.
FIGS. 12(A) to (D) are schematic diagrams illustrating an example of relaxation simulation of the lubrication surface model. First, as illustrated in FIG. 12(A), a resin layer was disposed in a periodic boundary cell of 50 Å×50 Å×150 Å, thereby forming a resin layer 86. Assuming that the positions of the atoms in the resin layer 86 would not be changed during the relaxation simulation, the positions of the atoms were fixed.
Next, as illustrated in FIG. 12(B), lubricant molecules 87 were randomly disposed above the surface of the resin layer 86. Experimentally, it has been found from previous measurements that a lubrication layer having a film thickness substantially equal to that of a bilayer membrane is formed. For comparison with the physical properties obtained in the experiments, the number of the lubricant molecules 87 was adjusted such that a formed lubrication layer 88 illustrated in FIG. 12(D) would have a film thickness substantially equal to that of a bilayer membrane in the thermal equilibrium state at room temperature.
Subsequently, as illustrated in FIGS. 12(C) and (D), a downward force was applied to the lubricant molecules 87,

and molecular dynamics calculation was executed under an ambient temperature of 300 K, thereby lowering the lubricant molecules 87 to form the lubrication layer 88 on the surface of the resin layer 86. As a result, the lubrication surface model was formed. Here, FIG. 12(C) illustrates the structure of the lubrication surface model during the molecular dynamics calculation, and FIG. 12(D) illustrates the structure of the lubrication surface model of the lubrication layer 88 after the calculation of 30 ps.

(Lubrication Surface Simulation)

The conditions for the lubrication surface simulation were set as follows. The DREIDING force field was used as the molecular force field. The cutoff method was used for the Lennard-Jones interaction. The cutoff distance was set to 12 Å at which the interaction was considered negligible. The Particle-Particle Particle-Mesh Ewald method was used for calculation of a long-range Coulomb interaction. The Nose-Hoover method was used as a temperature control method, thereby performing simulation by the NVT ensemble in which the number of particles (N), the volume (V), and the temperature (T) were constant. Molecular dynamics calculation was executed using free software LAMMPS.

For the lubrication surface simulation, the structure and the behaviors of the lubrication surface at 300 K were reproduced and analyzed.

<<Calculation of Interaction Energy (Step S8)>>

For all of the known lubricants, the interaction energy between each lubricant molecule and the resin layer was calculated. The interaction energy calculated for each lubricant molecule is illustrated in FIG. 11.

<<Derivation of Regression Formula (Step S9)>>

In the calculation of the friction coefficient (step S5), the friction coefficient (calculated value) in using a lubricant molecule was determined. In the calculation of the interaction energy (step S8), the interaction energy in using the same lubricant molecule was determined. These were repeated for each of the lubricant molecules illustrated in FIG. 11, thereby determining the friction coefficients (calculated values) and the interaction energy for all of the known lubricants.

By analyzing the calculation results illustrated in FIG. 11, a regression formula expressing the correlation between the friction coefficient (calculated value) and the interaction energy was derived. The derived regression formula is presented as Formula (8).

[Math. 1]

$$\mu = -3.6 \times 10^{-5} \times E - 0.012 \qquad \cdots (8)$$

Here, $\mu$ is the friction coefficient calculated from the friction molecular dynamics calculation, and E is the interaction energy calculated from the molecular dynamics calculation.

<<Estimation of Friction Coefficient (Step S10)>>

For all of the known lubricants, the interaction energy was assigned to the regression formula of Formula (8), thereby estimating the friction coefficient for each known lubricant. FIG. 11 illustrates the friction coefficients (estimated values) that were estimated for each known lubricant.

The estimated value of the friction coefficient regarding a known lubricant serves as a reference for determining whether or not a lubricant candidate is a suitable lubricant. When the estimated value of the friction coefficient regarding a lubricant candidate is lower than the estimated values of the friction coefficients regarding all of the known lubricants, this lubricant candidate can be determined as a suitable lubricant. In FIG. 11, the lowest estimated value of the friction coefficient is 0.00126 of ethylenebisstearic acid amide (EBSA) of No. 1-6. Therefore, when the estimated value of the friction coefficient regarding a lubricant candidate is lower than 0.00126, this lubricant candidate can be determined as a suitable lubricant, whereas when it is 0.00126 or higher, this lubricant candidate can be determined as an unsuitable lubricant.

<<Construction of Lubricant Molecule Model (Step S12)>>

The lubricant molecules illustrated in FIG. 13 were selected as lubricant candidates. FIG. 13 illustrates an example of calculation results of the lubricant candidates. For the unit structure of each of the lubricant molecules selected as the lubricant candidates, the stable structure and the charges of each atom were obtained through quantum chemical

calculation.

<<Construction of Lubrication Surface Model (Step S13)>>

For all of the lubricant candidates, the lubricant molecular model was repeatedly disposed on the resin layer model, thereby constructing the lubrication surface model of each lubricant molecule.

<<Implementation of Molecular Dynamics Calculation (Step S14)>>

The relaxation simulation and the lubrication surface simulation were repeatedly performed using the lubrication surface models that were constructed for all of the lubricant candidates.

<<Calculation of Interaction Energy (Step S15)>>

For all of the lubricant candidates, the interaction energy between each lubricant molecule and the resin layer was calculated. The interaction energy calculated for each lubricant candidate is illustrated in FIG. 13.

<<Estimation of Friction Coefficient (Step S16)>>

For all of the lubricant candidates, the interaction energy was assigned to the regression formula of Formula (8), thereby estimating the friction coefficient for each lubricant candidate. FIG. 13 illustrates the friction coefficients (estimated values) that were estimated for each lubricant candidate.

When the estimated value of the friction coefficient regarding a lubricant candidate was lower than the estimated values of the friction coefficients regarding all of the known lubricants, this lubricant candidate was determined as a suitable lubricant. That is, when the estimated value of the friction coefficient regarding a lubricant candidate was lower than 0.00126, this lubricant candidate was determined as a suitable lubricant, whereas when it was 0.00126 or higher, this lubricant candidate was determined as an unsuitable lubricant. For example, N-oleylstearic acid amide (NOSA) of No. 2-6 was predicted to be a suitable lubricant.

[Experimental Results]

The lubricant candidates predicted to be a suitable lubricant in the above Examples were verified for the friction coefficient through experiments. In the experiments, the friction coefficient of the surface of the sealant layer (CPP plane) and the friction coefficient of the surface of the base layer (PET plane) were measured. The lubricants used in the experiments were N-oleylstearic acid amide (NOSA), N-stearylstearic acid amide (NSSA), ethylenebisbehenic acid amide (EBBA), and ethylenebislauric acid amide (EBLA), which were predicted to be a suitable lubricant in the Examples. In addition, erucic acid amide (EA), a known lubricant serving as a reference, was measured in the same manner. In the experiment, the friction coefficient of each lubricant was measured immediately after transfer, on Day 1 after transfer, and on Day 5 after transfer, in order to verify change in the friction coefficient over time.

FIG. 14A is a graph illustrating an example of experimental results regarding the friction coefficient on the CPP plane. FIG. 14B is a graph illustrating an example of experimental results regarding the friction coefficient on the PET plane. As illustrated in FIGS. 14A and 14B, ethylenebisbehenic acid amide (EBBA) had a friction coefficient worse than that of erucic acid amide (EA). Meanwhile, N-oleylstearic acid amide (NOSA) had a friction coefficient higher than that of erucic acid amide (EA) immediately after transfer, but had a friction coefficient lower than that of erucic acid amide (EA) on Day 1 after transfer. Therefore, it was confirmed that N-oleylstearic acid amide (NOSA), which was indicated to be a suitable lubricant in the above Examples, was able to reduce the friction coefficient in a time shorter than did the known lubricant.

[Notes]

Each of the functions of the embodiments described above can be implemented by one or more processing circuits. The "processing circuit" in the present specification includes a processor programmed to execute functions by software, such as a processor mounted by an electronic circuit, and apparatuses, such as ASIC (Application Specific Integrated Circuit), DSP (Digital Signal Processor), FPGA (Field Programmable Gate Array), conventional circuit modules, and the like, designed to execute the above-described functions.

Although the embodiments of the present invention have been described above in detail, the present invention is not limited to these embodiments, and various modifications or alterations are possible within the scope of the gist of the inventions recited in the claims.

The present application claims the priority to Japanese Patent Application No. 2022-172490, filed with the Japan Patent Office on October 27, 2022, the entire contents thereof are incorporated herein by reference.

REFERENCE SIGNS LIST

| | |
|---|---|
| 1 | Design support system |
| 10 | Lubricant selection apparatus |
| 20 | Friction coefficient estimation apparatus |
| 30 | User terminal |
| 101 | Lubricant information input unit |
| 102 | Model construction unit |
| 103 | Friction coefficient calculation unit |
| 104 | Energy calculation unit |
| 105 | Regression formula generation unit |
| 106 | Friction coefficient estimation unit |
| 107 | Analysis result storage unit |
| 108 | Lubricant selection unit |
| 300 | Lubricant information storage unit |
| 301 | Lubricant information generation unit |
| 302 | Result display unit |

**Claims**

**1.** A lubricant selection apparatus, comprising:

a lubricant information input unit configured to receive an input of information on a plurality of lubricant candidates;
an energy calculation unit configured to calculate an interaction energy between a lubrication layer and a resin layer, the lubrication layer being formed by each of the plurality of lubricant candidates;
a friction coefficient estimation unit configured to estimate, in accordance with the interaction energy, a friction coefficient between the resin layer and a mold layer via the lubrication layer; and
a lubricant selection unit configured to select a lubricant from the plurality of lubricant candidates in accordance with the friction coefficient.

**2.** The lubricant selection apparatus according to claim 1, wherein
the friction coefficient estimation unit is configured to estimate the friction coefficient from the interaction energy in accordance with a regression formula that is predetermined.

**3.** The lubricant selection apparatus according to claim 2, wherein
the regression formula expresses a correlation between the interaction energy and the friction coefficient.

**4.** The lubricant selection apparatus according to claim 3, wherein
the regression formula is derived using the interaction energy and the friction coefficient that are calculated through molecular dynamics calculation on a lubricant different from the lubricant candidates.

**5.** The lubricant selection apparatus according to claim 4, wherein
a regression coefficient of the regression formula is $-3.6\times10^{-5}$

**6.** The lubricant selection apparatus according to any one of claims 1 to 5, wherein
the lubricant is used as a lubricant to be added to the resin layer in a power storage device packaging material including the resin layer, a sealant layer, and a metal foil layer disposed between the resin layer and the sealant layer.

**7.** A friction coefficient estimation apparatus, comprising:

a lubricant information input unit configured to receive an input of information on a lubricant;
an energy calculation unit configured to calculate an interaction energy between a lubrication layer and a resin layer, the lubrication layer being formed by the lubricant; and

a friction coefficient estimation unit configured to estimate, in accordance with the interaction energy, a friction coefficient between the resin layer and a mold layer via the lubrication layer.

**8.** A lubricant selection method, comprising:

a procedure of receiving an input of information on a plurality of lubricant candidates;
a procedure of calculating an interaction energy between a lubrication layer and a resin layer, the lubrication layer being formed by each of the plurality of lubricant candidates;
a procedure of estimating, in accordance with the interaction energy, a friction coefficient between the resin layer and a mold layer via the lubrication layer; and
a procedure of selecting a lubricant from the plurality of lubricant candidates in accordance with the friction coefficient,
the procedure of receiving, the procedure of calculating, the procedure of estimating, and the procedure of selecting being executed by a computer.

**9.** A production method of a power storage device packaging material, the production method comprising:
using a lubricant selected by the lubricant selection method of claim 8, thereby producing the power storage device packaging material including the resin layer to which the lubricant is added, a sealant layer, and a metal foil layer disposed between the resin layer and the sealant layer.

**10.** A program causing a computer to execute:

a procedure of receiving an input of information on a plurality of lubricant candidates;
a procedure of calculating an interaction energy between a lubrication layer and a resin layer, the lubrication layer being formed by each of the plurality of lubricant candidates;
a procedure of estimating, in accordance with the interaction energy, a friction coefficient between the resin layer and a mold layer via the lubrication layer; and
a procedure of selecting a lubricant from the plurality of lubricant candidates in accordance with the friction coefficient.

FIG.1

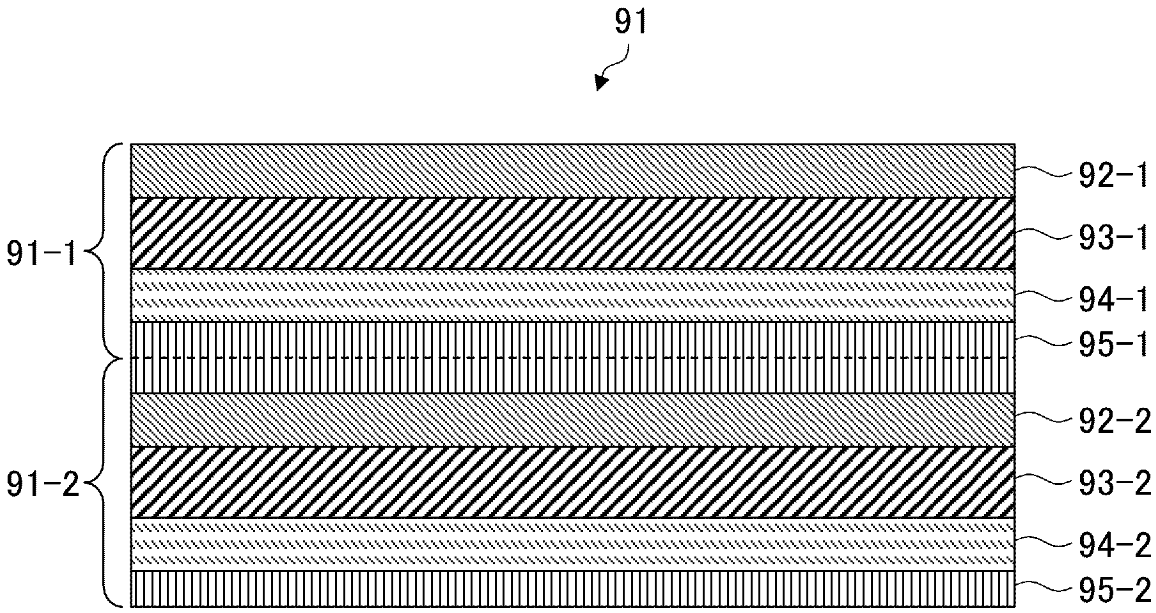

FIG.2

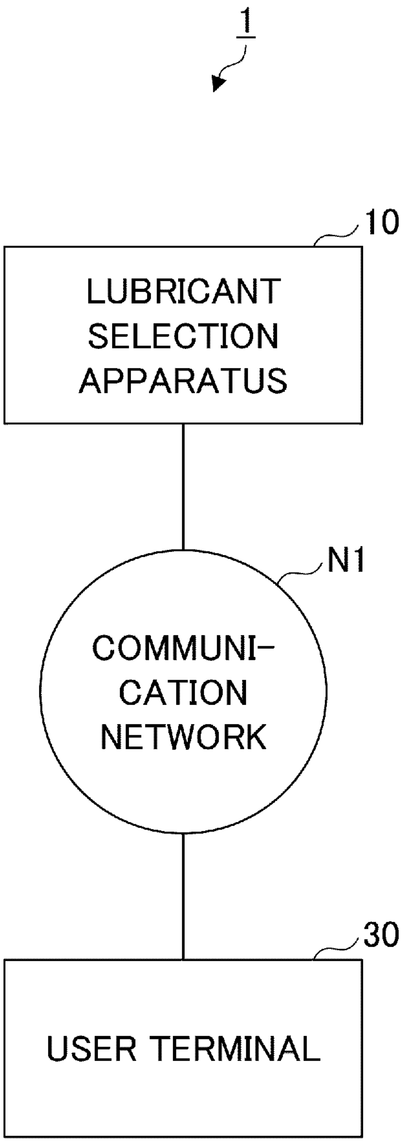
1
10
LUBRICANT SELECTION APPARATUS
N1
COMMUNI-CATION NETWORK
30
USER TERMINAL

FIG.3

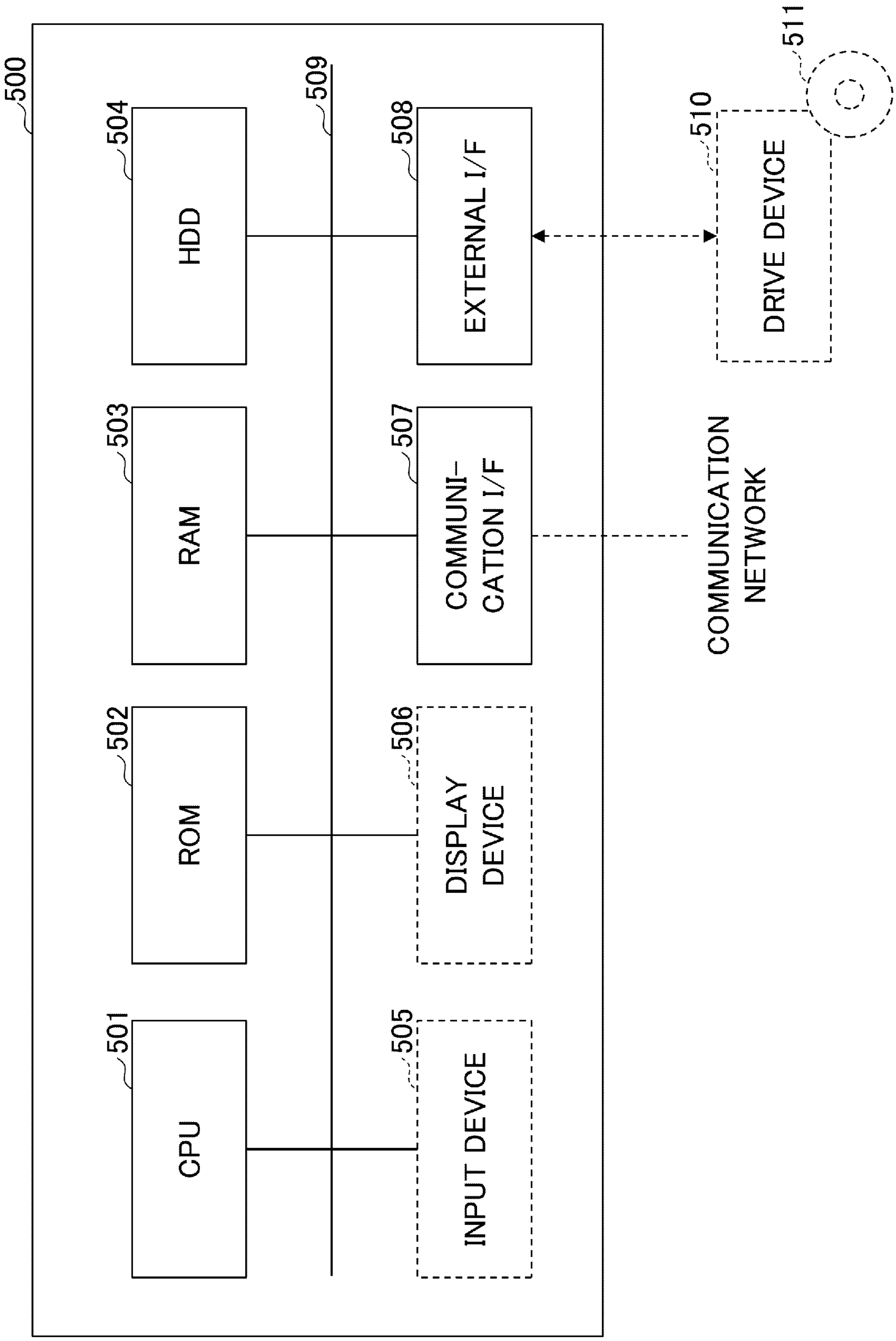
500
CPU
501
ROM
502
RAM
503
HDD
504
509
INPUT DEVICE
505
DISPLAY DEVICE
506
COMMUNI-CATION I/F
507
EXTERNAL I/F
508
COMMUNICATION NETWORK
DRIVE DEVICE
510
511

FIG.4

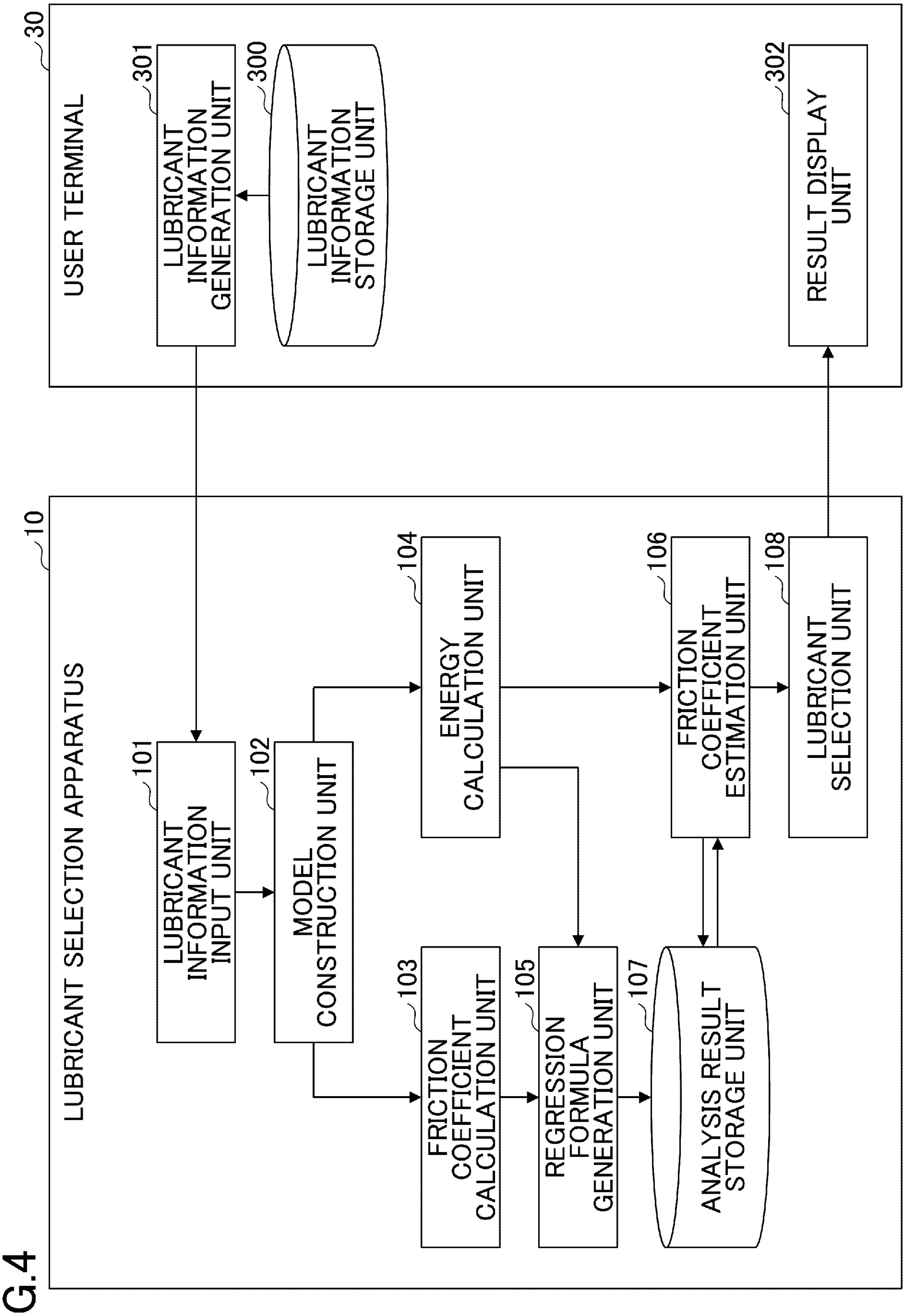

USER TERMINAL
30
301
LUBRICANT INFORMATION GENERATION UNIT
300
LUBRICANT INFORMATION STORAGE UNIT
302
RESULT DISPLAY UNIT
LUBRICANT SELECTION APPARATUS
10
101
LUBRICANT INFORMATION INPUT UNIT
102
MODEL CONSTRUCTION UNIT
103
FRICTION COEFFICIENT CALCULATION UNIT
104
ENERGY CALCULATION UNIT
105
REGRESSION FORMULA GENERATION UNIT
106
FRICTION COEFFICIENT ESTIMATION UNIT
107
ANALYSIS RESULT STORAGE UNIT
108
LUBRICANT SELECTION UNIT

FIG.5

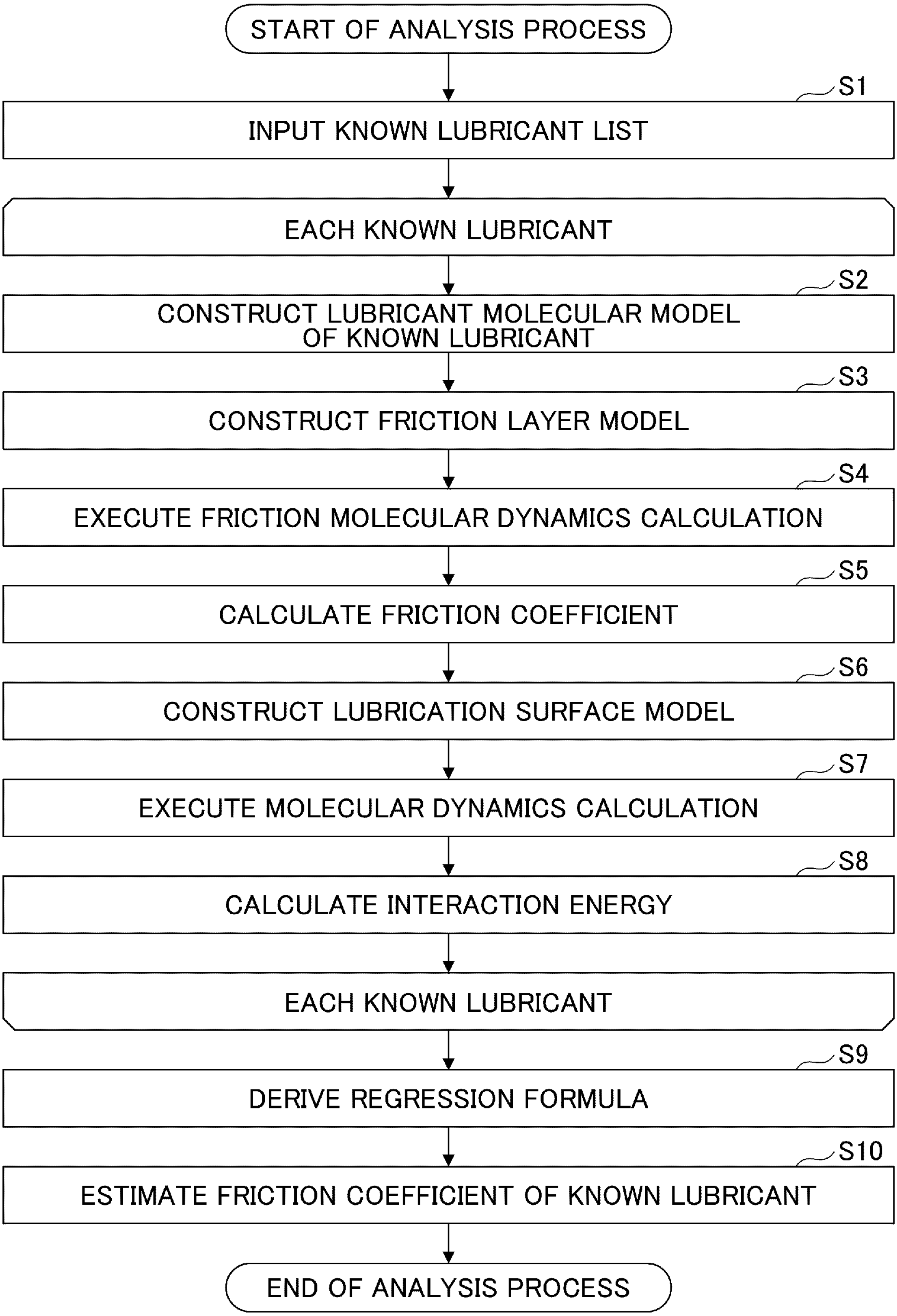
START OF ANALYSIS PROCESS
S1
INPUT KNOWN LUBRICANT LIST
EACH KNOWN LUBRICANT
S2
CONSTRUCT LUBRICANT MOLECULAR MODEL OF KNOWN LUBRICANT
S3
CONSTRUCT FRICTION LAYER MODEL
S4
EXECUTE FRICTION MOLECULAR DYNAMICS CALCULATION
S5
CALCULATE FRICTION COEFFICIENT
S6
CONSTRUCT LUBRICATION SURFACE MODEL
S7
EXECUTE MOLECULAR DYNAMICS CALCULATION
S8
CALCULATE INTERACTION ENERGY
EACH KNOWN LUBRICANT
S9
DERIVE REGRESSION FORMULA
S10
ESTIMATE FRICTION COEFFICIENT OF KNOWN LUBRICANT
END OF ANALYSIS PROCESS

FIG.6

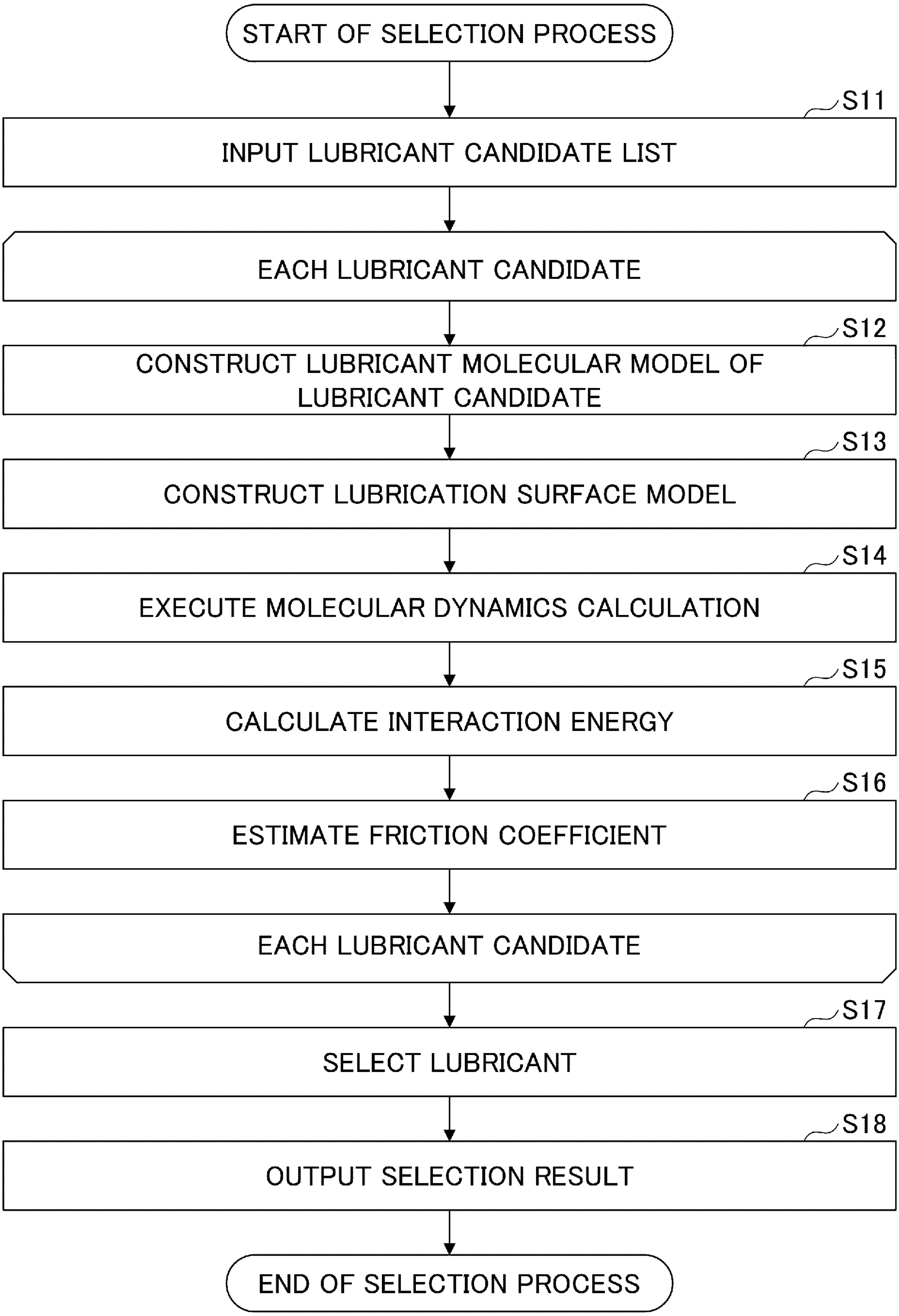
START OF SELECTION PROCESS
S11
INPUT LUBRICANT CANDIDATE LIST
EACH LUBRICANT CANDIDATE
S12
CONSTRUCT LUBRICANT MOLECULAR MODEL OF LUBRICANT CANDIDATE
S13
CONSTRUCT LUBRICATION SURFACE MODEL
S14
EXECUTE MOLECULAR DYNAMICS CALCULATION
S15
CALCULATE INTERACTION ENERGY
S16
ESTIMATE FRICTION COEFFICIENT
EACH LUBRICANT CANDIDATE
S17
SELECT LUBRICANT
S18
OUTPUT SELECTION RESULT
END OF SELECTION PROCESS

FIG.7

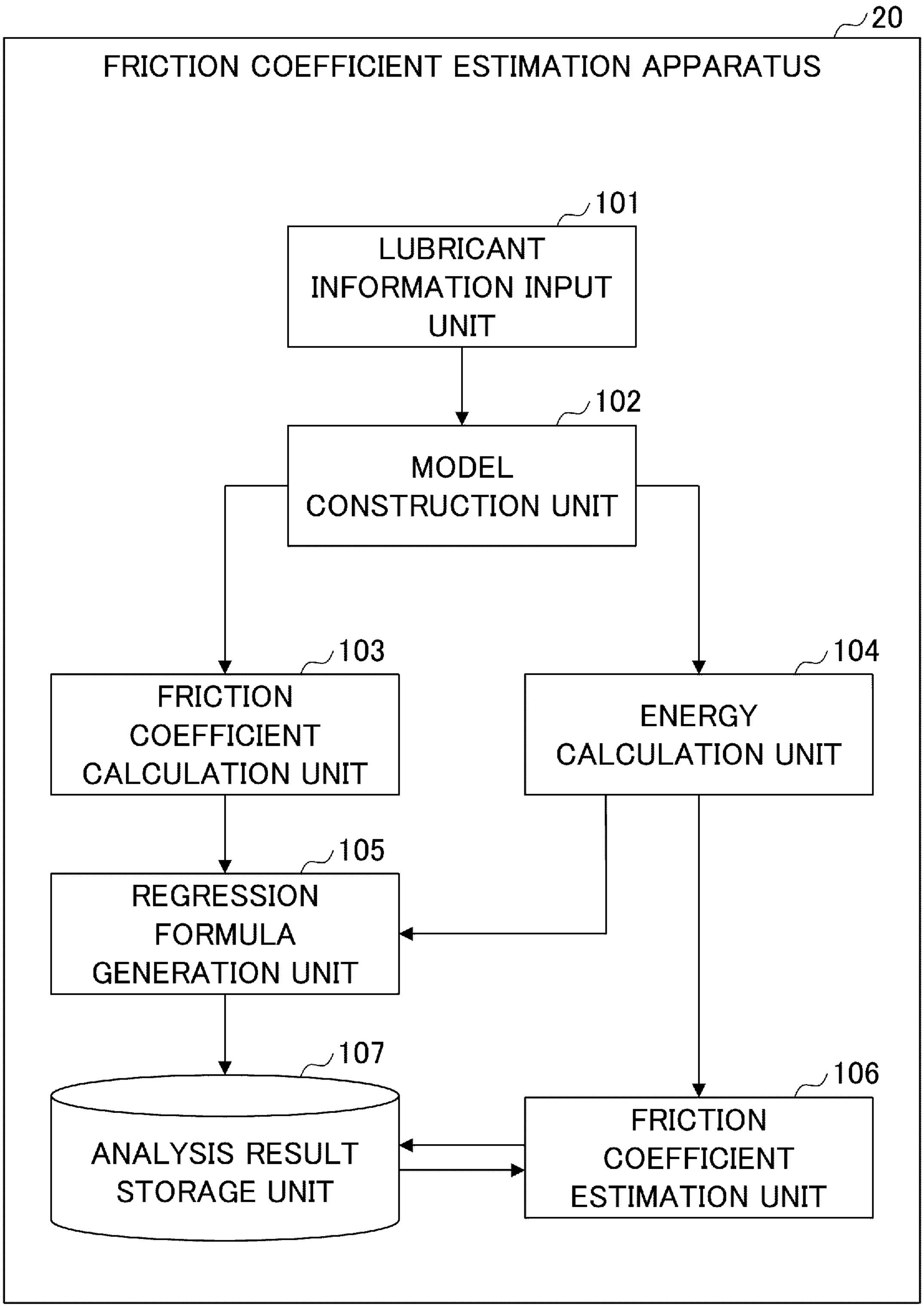
20
FRICTION COEFFICIENT ESTIMATION APPARATUS
101
LUBRICANT INFORMATION INPUT UNIT
102
MODEL CONSTRUCTION UNIT
103
FRICTION COEFFICIENT CALCULATION UNIT
104
ENERGY CALCULATION UNIT
105
REGRESSION FORMULA GENERATION UNIT
107
ANALYSIS RESULT STORAGE UNIT
106
FRICTION COEFFICIENT ESTIMATION UNIT

FIG.8

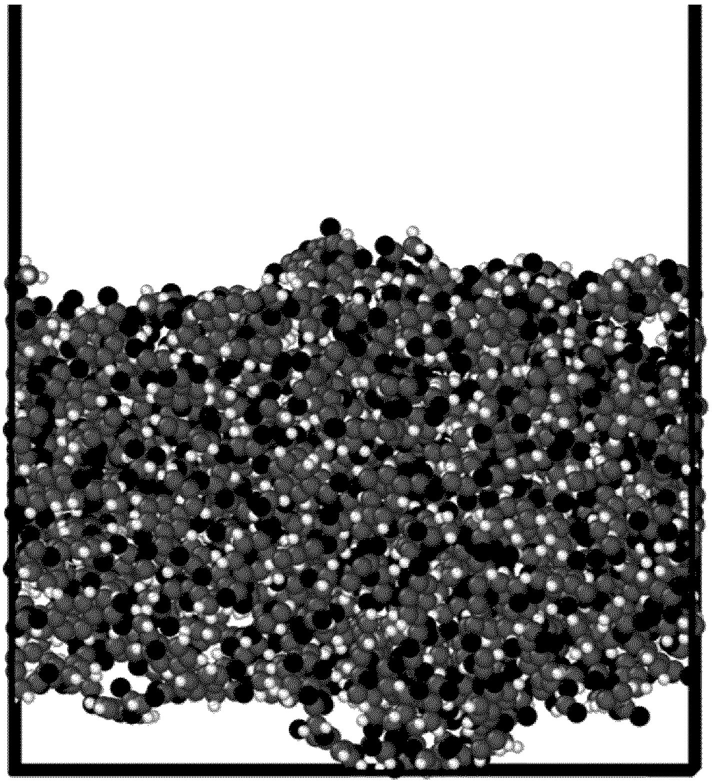

FIG.9

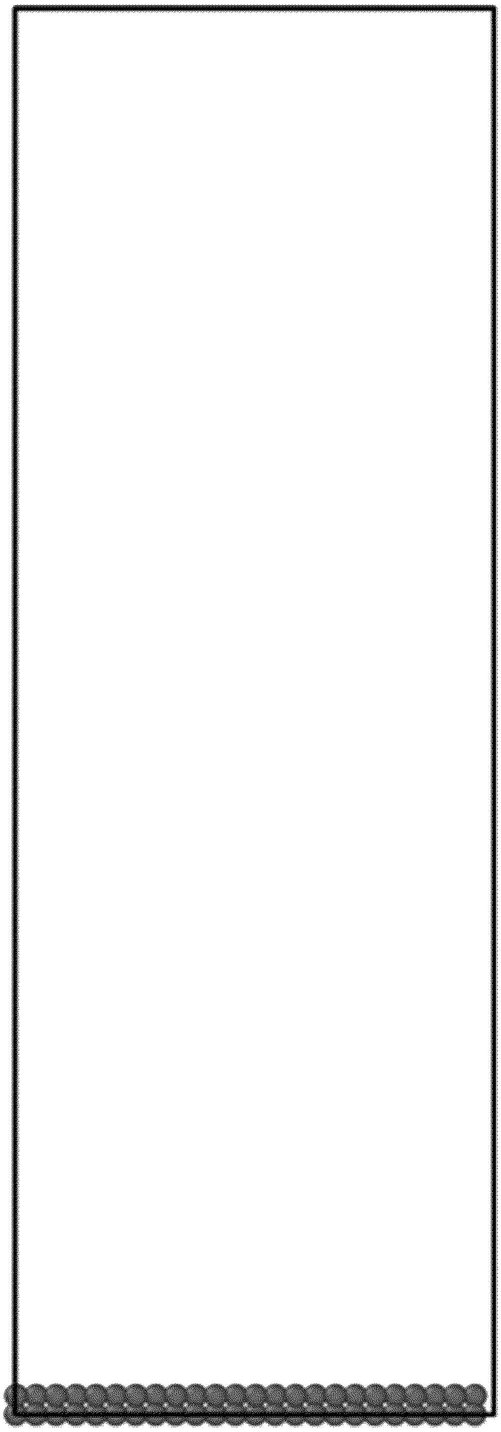

IRON (111)

FIG.10

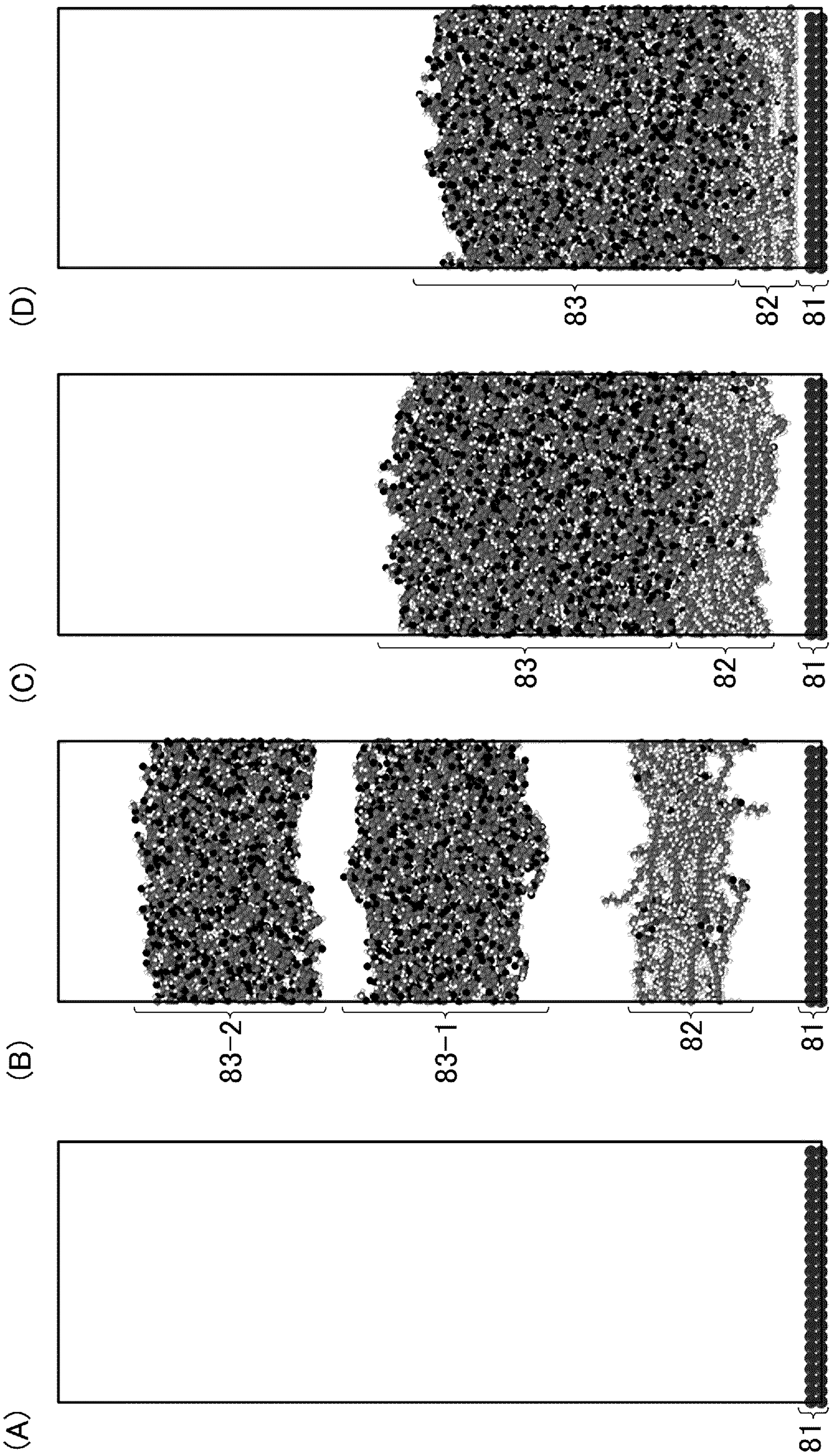

# FIG.11

| No. | LUBRICANT MOLECULE | FRICTION COEFFICIENT (CALCULATED VALUE) | INTERACTION ENERGY [kcal/mol] | FRICTION COEFFICIENT (ESTIMATED VALUE) |
|---|---|---|---|---|
| 1-1 | ERUCIC ACID AMIDE(EA) | 0.0020 | −417.3 | 0.00309 |
| 1-2 | OLEIC ACID AMIDE(OA) | 0.0047 | −437.1 | 0.00380 |
| 1-3 | BEHENIC ACID AMIDE(BA) | 0.0024 | −369.1 | 0.00136 |
| 1-4 | STEARIC ACID AMIDE(SA) | 0.00064 | −378.7 | 0.00170 |
| 1-5 | ETHYLENEBISOLEIC ACID AMIDE(EBOA) | 0.0014 | −374.0 | 0.00153 |
| 1-6 | ETHYLENEBISSTEARIC ACID AMIDE(EBSA) | 0.0015 | −366.4 | 0.00126 |

FIG.12

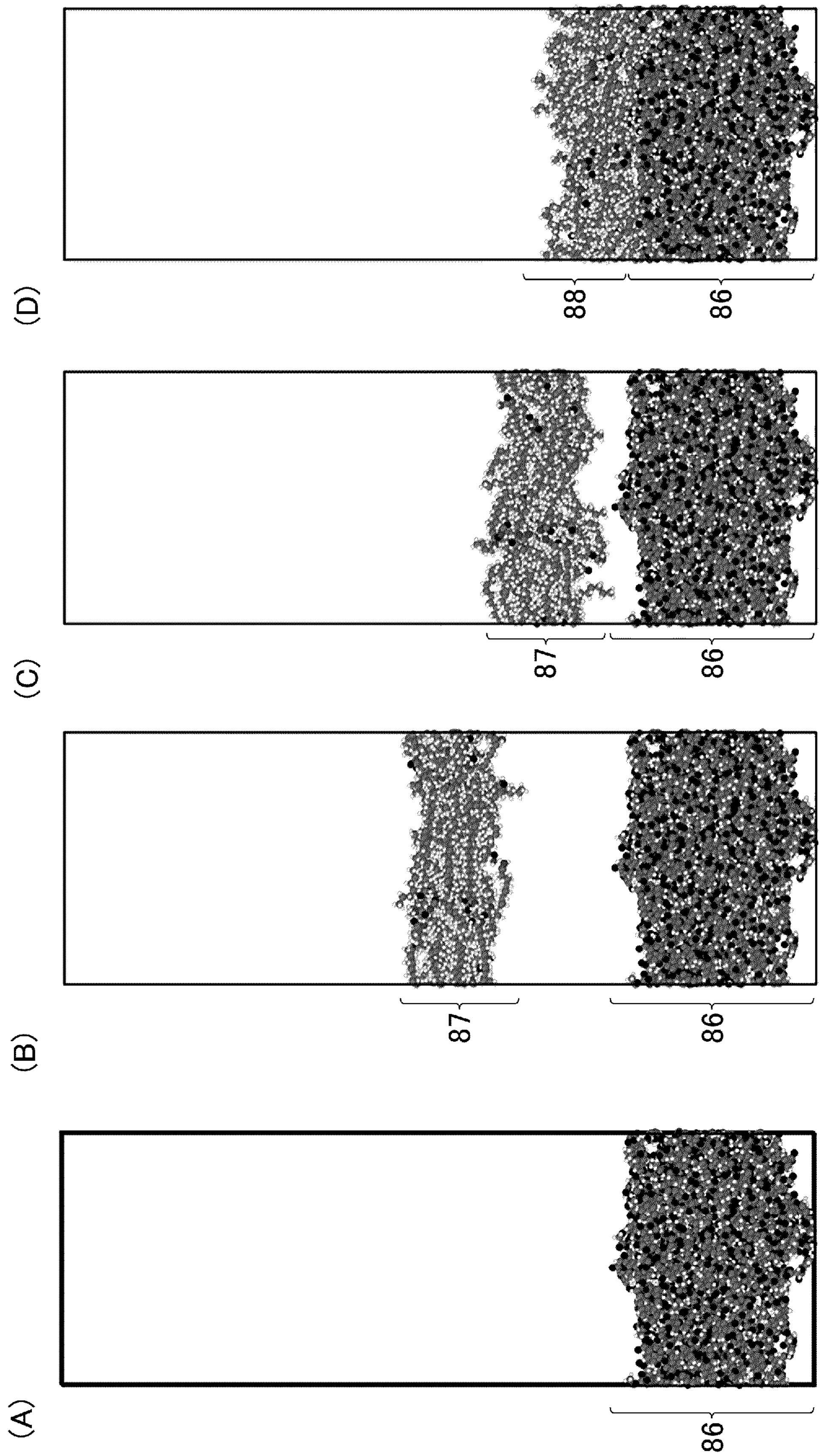

FIG.13

| No. | LUBRICANT MOLECULE | INTERACTION ENERGY [kcal/mol] | FRICTION COEFFICIENT (ESTIMATED VALUE) |
|---|---|---|---|
| 2-1 | LAURIC ACID AMIDE(LA) | -507.8 | 0.006351454 |
| 2-2 | PALMITIC ACID AMIDE(PA) | -431.6 | 0.003606426 |
| 2-3 | HYDROXYSTEARIC ACID AMIDE(HAS) | -416.0 | 0.003044863 |
| 2-4 | N-STEARYLSTEARIC ACID AMIDE(NSSA) | -346.4 | 0.000539643 |
| 2-5 | N-STEARYLOLEIC ACID AMIDE(NSOA) | -365.9 | 0.001240288 |
| 2-6 | N-OLEYLSTEARIC ACID AMIDE(NOSA) | -351.7 | 0.000729090 |
| 2-7 | N-STEARYLERUCIC ACID AMIDE(NSEA) | -357.8 | 0.000948282 |
| 2-8 | N-OLEYLOLEIC ACID AMIDE(NOOA) | -365.6 | 0.001229659 |
| 2-9 | METHYLOLSTEARIC ACID AMIDE(MeolSA) | -427.4 | 0.003454389 |
| 2-10 | METHYLENEBISSTEARIC ACID AMIDE(MBSA) | -350.0 | 0.000669180 |
| 2-11 | ETHYLENEBISCAPROIC ACID AMIDE(EBCA) | -404.8 | 0.002641252 |
| 2-12 | ETHYLENEBISLAURIC ACID AMIDE(EBLA) | -382.8 | 0.001848146 |
| 2-13 | ETHYLENEBISHYDROXYSTEARIC ACID AMIDE(EBHSA) | -396.8 | 0.002353092 |
| 2-14 | ETHYLENEBISBEHENIC ACID AMIDE(EBBA) | -339.0 | 0.000271046 |
| 2-15 | HEXAMETHYLENEBISSTEARIC ACID AMIDE(HMBSA) | -348.7 | 0.000620880 |
| 2-16 | HEXAMETHYLENEBISBEHENIC ACID AMIDE(HMBBA) | -347.3 | 0.000572061 |
| 2-17 | HEXAMETHYLENEBISHYDROXYSTEARIC ACID AMIDE(HMBHSA) | -397.5 | 0.002376890 |
| 2-18 | N,N'-DISTEARYLADIPIC ACID AMIDE(NNDSAA) | -366.0 | 0.001244049 |
| 2-19 | ETHYLENEBISERUCIC ACID AMIDE(EBEA) | -375.7 | 0.001594063 |
| 2-20 | HEXAMETHYLENEBISOLEIC ACID AMIDE(HMBOA) | -378.3 | 0.001686500 |
| 2-21 | N,N'-DIOLEYLADIPIC ACID AMIDE(NNDOAA) | -379.4 | 0.001727877 |
| 2-22 | N,N'-DIOLEYLSEBACIC ACID AMIDE(NNDOSA) | -369.6 | 0.001375093 |

FIG.14A

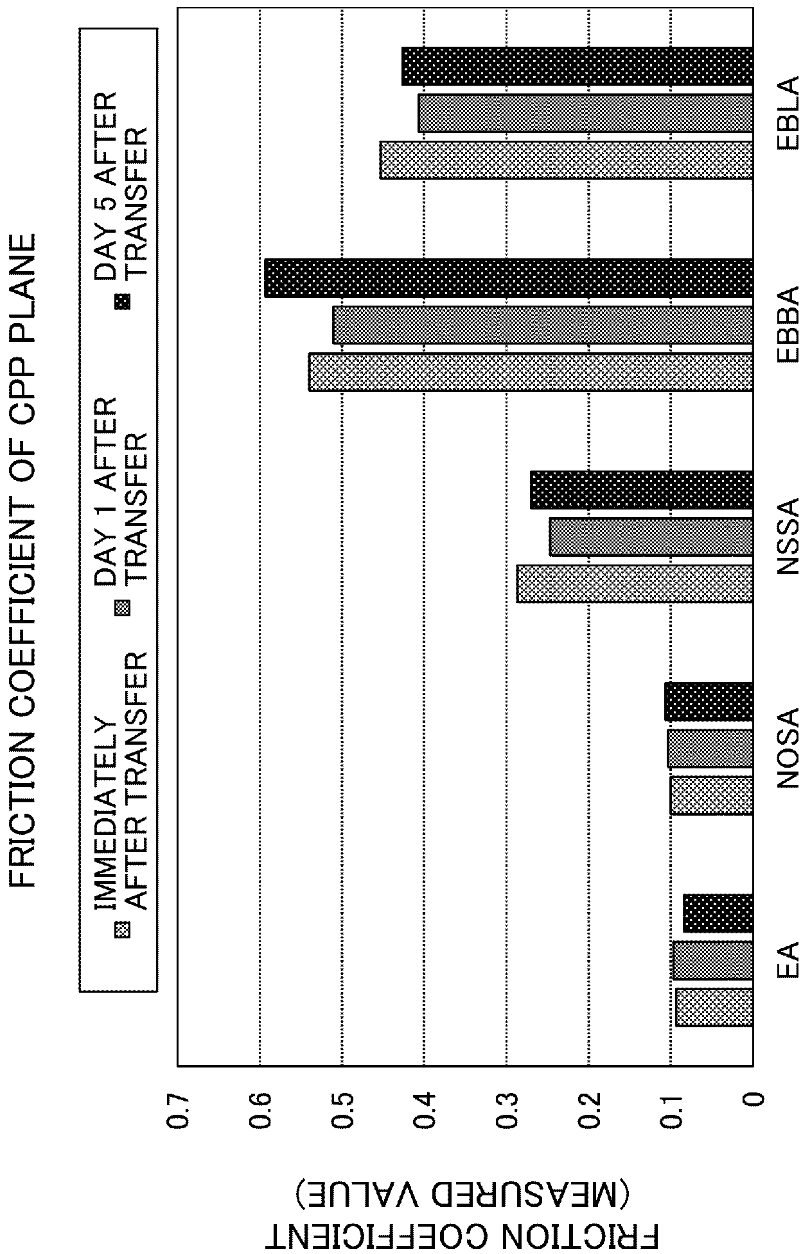
FRICTION COEFFICIENT OF CPP PLANE
IMMEDIATELY AFTER TRANSFER
DAY 1 AFTER TRANSFER
DAY 5 AFTER TRANSFER
FRICTION COEFFICIENT (MEASURED VALUE)
0.7
0.6
0.5
0.4
0.3
0.2
0.1
0
EA
NOSA
NSSA
EBBA
EBLA

FIG.14B

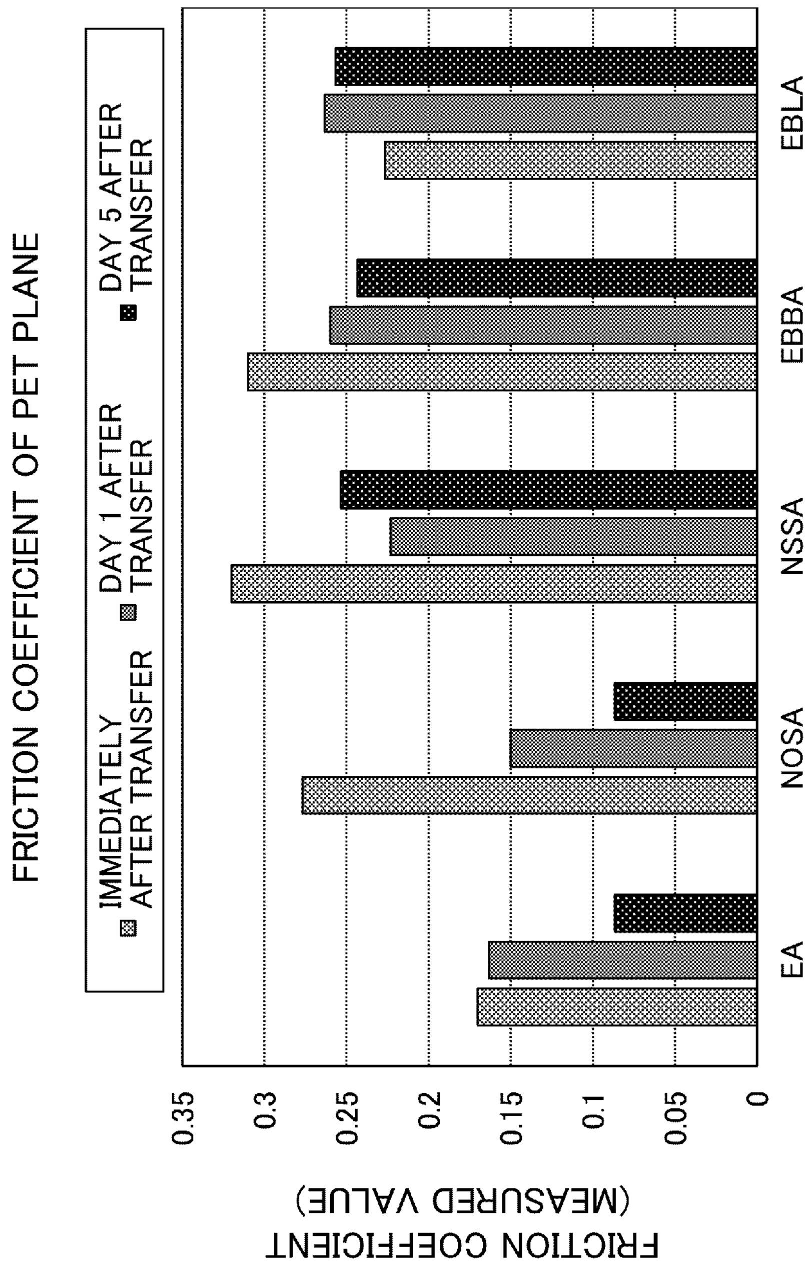
FRICTION COEFFICIENT OF PET PLANE
IMMEDIATELY AFTER TRANSFER
DAY 1 AFTER TRANSFER
DAY 5 AFTER TRANSFER
FRICTION COEFFICIENT (MEASURED VALUE)
0.35
0.3
0.25
0.2
0.15
0.1
0.05
0
EA
NOSA
NSSA
EBBA
EBLA

## INTERNATIONAL SEARCH REPORT

International application No.
**PCT/JP2023/038185**

**A. CLASSIFICATION OF SUBJECT MATTER**

***B32B 27/18***(2006.01)i; ***B32B 15/08***(2006.01)i; ***B29B 7/88***(2006.01)i; ***H01M 50/119***(2021.01)i; ***H01M 50/121***(2021.01)i; ***H01M 50/126***(2021.01)i; ***H01M 50/129***(2021.01)i
FI: B29B7/88; B32B15/08 E; B32B27/18 Z; H01M50/119; H01M50/129; H01M50/121; H01M50/126

According to International Patent Classification (IPC) or to both national classification and IPC

**B. FIELDS SEARCHED**

Minimum documentation searched (classification system followed by classification symbols)

B32B1/00-43/00; B29B7/00-7/94;H01M50/00-50/198

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2013-149397 A (SHOWA DENKO PACKAGING CO LTD) 01 August 2013 (2013-08-01) entire text | 1-10 |
| A | JP 2019-016537 A (DAINIPPON PRINTING CO LTD) 31 January 2019 (2019-01-31) entire text | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 December 2023** | **12 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/038185**

| Patent document cited in search report | Publication date (day/month/year) | Patent family member(s) | Publication date (day/month/year) |
|---|---|---|---|
| JP 2013-149397 A | 01 August 2013 | CN 103208593 A<br>entire text | |
| JP 2019-016537 A | 31 January 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022020772 A
- JP 2022172490 A